# EUROPEAN PATENT APPLICATION

(11) **EP 1 328 114 A1**
(43) Date of publication of application: **16.07.2003**
(21) Application number: 02290062.5
(22) Date of filing: 10.01.2002
(51) Int. Cl.: H04N 5/00

(54) **Image resolution management in a receiver/decoder**

(71) Applicant: Canal+ Technologies Société Anonyme, 75906 Paris Cedex 15 (FR)
(72) Inventor: Allizon, Stéphane Canal+ Tech.Societe Anonyme, 75906 Cedex Paris 15 (FR); Le Crom, François Canal+ Tech.Societe Anonyme, 75906 Cedex Paris 15 (FR)
(74) Representative: Cozens, Paul Dennis

(57) **Abstract**

A receiver/decoder is disclosed, essentially comprising means for receiving an audiovisual bit stream at a given input resolution, and means for selecting an output resolution to be applied to an output representation of the audiovisual bit stream.

## Description

The present invention relates to a receiver/decoder, a method of outputting a representation of an audiovisual bit stream, a method of outputting an output image having a given output resolution, apparatus for outputting a representation of an audio/visual bit stream, a computer program product, a computer readable medium, and a signal tangibly embodying a computer program product. It finds particular application in the field of high-definition digital television systems.

Digital television systems transmit television channels to the viewer in digital, rather than analogue, form. The digital channels are encoded into a digital data stream at the transmitter end, and are decoded at the receiver end using a digital receiver/decoder. To allow interactivity, an uplink may be provided, either via the same medium that delivers the television channels, or else via a different medium such as a telephone link. Further types of data, such as digital audio, software and interactive data can be or are also broadcast. As used herein, the term "digital television system" includes for example any satellite, terrestrial, cable and other system.

The term "receiver/decoder" as used herein may connote a receiver for receiving either encoded or non-encoded signals, for example television and/or radio signals, preferably in MPEG format, which may be broadcast or transmitted by some other means. The term may also connote a decoder for decoding received signals. Embodiments of such receiver/decoders may include a decoder integral with the receiver for decoding the received signals, for example, in a "set-top box", such as a decoder functioning in combination with a physically separate receiver, or such a decoder including additional functions, such as a web browser, a video recorder, or a television.

The term MPEG refers to the data transmission standards developed by the International Standards Organisation working group "Motion Pictures Expert Group" and in particular but not exclusively the MPEG-2 standard developed for digital television applications and set out in the documents ISO 13818-1, ISO 13818-2, ISO 13818-3 and ISO 13818-4, and the MPEG-4 and other contemplated MPEG standards. In the context of the present patent application, the term includes all variants, modifications or developments of MPEG formats applicable to the field of digital data transmission.

In standard-definition television, broadcast signals are generally transmitted with a unique resolution. Receiver/decoders for decoding such signals correspondingly have a unique video output resolution, equivalent to the broadcast resolution, and television sets for use with such receiver/decoders only typically support one and the same input resolution.

In comparison, receiver/decoders used in high-definition (HD) television are required to decode high-resolution audiovisual broadcast bit streams (resolution up to 1920x1080 for an ATSC-specified HD stream), as well as the traditional low-resolution audiovisual broadcast bit streams.

Similarly, high-definition televisions (HDTVs) can accept several digital output video resolutions. For example, HDTVs connected by a D-connector accept, depending on their type, some or all of the following formats: 480i, 480p, 1080i, 720p, 1080p, where 'i' represents 'interleaved' and 'p' represents 'progressive' format; for instance, a 'D1' HDTV only accepts 480i format, while a 'D5' HDTV accepts all five formats.

Conventional receiver/decoders of the type described above can be modified to decode the range of input resolutions, but the resulting display can often be unsatisfactory. The present invention, however, attempts to address problems identified in the above and other prior art.

Accordingly, in a first aspect of the invention there is provided a receiver/decoder comprising means (such as a receiver) for receiving an audio/visual bit stream at a given input resolution, and means (such as a suitably programmed graphics processor) for selecting an output resolution to be applied to an output representation of the audio/visual bit stream.

The term "resolution" as used herein preferably connotes the size and/or quality of an image, determined by such factors as the width and height of the image (preferably in terms of pixels), whether the image is interlaced or progressive, and/or the size and nature of the colour space (such as 8 bit, 16 bit or 24 bit), for example. The terms "higher" and "lower" used in relation to resolutions preferably connote larger and smaller picture sizes (in terms of pixels) respectively. The term "audio/visual" as used herein preferably connotes either audio or visual matter, or a combination of the two. In the context of a broadcast signal received by a receiver/decoder, the term may encompass subtitle, teletext, synchronisation and other data transmitted in close relation to audio and video components making up a television programme.

The audio/visual bit stream may be a digital television signal, preferably received (at some level) in MPEG-2 format, and preferably comprising a video component and/or audio and other components. The output representation of the audio/visual bit stream is preferably a video signal suitable for outputting to a television or other display device attached to the receiver/decoder via a scart connector, for example. The bit stream may alternatively be an audio bit stream (radio channel), a webcast, or other digital (or conceivably analogue) signal.

The means for selecting an output resolution is preferably adapted to select from a choice of resolutions. Such resolutions preferably comprise higher and/or lower resolutions.

By selecting an output resolution for outputting a representation of the audio/visual bit stream, an output can be generated which is suitable for display on different types of television attached to the receiver/decoder, for example, particularly where the different types of television can support different output resolutions or sets of output resolutions with respect to each other.

The means for selecting an output resolution may be adapted to select a different resolution to the input resolution. The receiver/decoder then preferably further comprises means (such as a graphics processor) for upsizing or downsizing the received audio/visual bit stream to form the output representation of the audio/visual bit stream. Such means is preferably adapted to upsample or downsample each frame of video data in the audio/visual bit stream.

This can allow more appropriate resolutions to be chosen if, for example, the input resolution cannot be displayed on an attached display device (such as a television), or if the use of a higher resolution than the input resolution, for example, would result in an improved display.

The means for selecting an output resolution is preferably adapted to select a new output resolution in response to a change in input resolution. Thus, the receiver/decoder can respond to a change in input resolution arising, for example, from a transition from one programme at one resolution to another programme at a different resolution in a digital television (preferably MPEG-2) programme stream. For instance, the first programme could be a high-resolution movie, and the second programme could be a low-resolution advertisement break.

The receiver/decoder may further comprise means (such as a receiver) for receiving data governing a choice of resolutions, the means for selecting an output resolution being adapted to select the output resolution in accordance with the received data. This can allow a separate entity to determine the capabilities of the attached display device, for example, and pass on the information to the means for selecting the output resolution in the form of the data governing a choice of resolutions. The resulting abstraction of this determining process can lead to greater efficiency and reliability.

Preferably the receiver/decoder is adapted to receive the data governing a choice of resolutions with respect to changes in input resolution, and is more preferably adapted to receive the data at initialisation of the receiver/decoder and/or when the user intervenes. This can minimise the interaction required with the process determining the acceptable resolutions, and thus increase the efficiency of the receiver/decoder.

The data governing a choice of resolutions may comprise a list of acceptable resolutions. Alternatively, the data governing a choice of resolutions may comprise rules using which the means for selecting an output resolution can determine the acceptable or unacceptable resolutions. Such rules may specify, for example, that the output resolution should be maintained, excepting certain specified exceptions.

The receiver/decoder preferably further comprises means (such as a suitably programmed graphics processor) for transforming a plurality of source image representations of which at least one has a different resolution into intermediate image representations having the given output resolution, and means (such as the same or a further suitably programmed graphics processor) for combining the intermediate image representations thus obtained to form an output image representation also having the given output resolution.

The term "image representation" as used herein preferably connotes any encoding of an image, such as the encoding of a television frame in an MPEG data segment, or the encoding of an image as a series of 1s and 0s. Preferably the term extends to any set of electrical pulses or other sources of information which can be assembled in some fashion or otherwise decoded to form an image.

Preferably one of the source image representations is a frame of the audio/visual bit stream. By transforming the source image representations and combining the image representations thus obtained to form the output image representation, a graphics processing system can be created which is capable of accepting as its input a plurality of images of non-fixed resolution, and producing a single output image. Furthermore, a variety of text and graphics can easily be overlaid on the representation of the audio/visual bit stream.

Furthermore, the means for transforming is preferably adapted to perform one of an upsizing and a downsizing operation on at least one of the source layers. Such an upsizing or downsizing operation in its simplest form may consist of duplicating or removing pixels from the image representation. Anti-aliasing operations and other methods of improving the quality of the transformed image representation may further be used. Thus, the transformation can either be implemented more efficiently, as in the first case, or with a superior result, as in the second case.

The means for combining is preferably adapted to perform one of a masking and alpha blending operation on the transformed image representations. Correspondingly, preferably at least one of the image representations also contains masking and/or transparency information, which can allow the image representations to be combined with more flexibility. Alternatively, masking and/or alpha blending operations may also be conducted using global settings not linked exclusively to any one of the image representations. The use of such operations to transform image representations can result in a visually superior output image.

In a related aspect of the invention, there is provided a receiver/decoder, comprising means (such as a suitably programmed graphics processor) for transforming a plurality of source image representations of which at least one has a different resolution into intermediate image representations having a given output resolution, and means (such as the same or a further suitably programmed graphics processor) for combining the intermediate image representations thus obtained to form an output image representation having the output resolution.

The means for transforming a plurality of source image representations is preferably adapted to maintain at the same resolution at least one source image representation during the transformation step. This can further improve the efficiency of the operation.

The means for transforming the source image representations may be adapted to altering the source image representations directly, or it may alternatively be adapted to create intermediate image representations to receive the transformed source image representation data. Alternatively, a single means may be provided to produce the effect of forming the intermediate image representations and combining the intermediate image representations in one step, such that the source image representations are not changed by the transformation.

By creating intermediate image representations, rather than, for example, transforming the source image representations directly, the method can be repeated without the need to regenerate the source image representations, and can thus directly give speed savings.

The receiver/decoder preferably further comprises means for modifying at least one of the source image representations, and means for repeating the transforming and combining steps. Thus, a single change to the output image representation can be implemented by regenerating only some of the source image representations (possibly just one), leaving the remainder of the source image representations untouched. This can further improve computational efficiency.

The receiver/decoder preferably further comprises means for assigning at least one source image representation to a first process and means for assigning at least one further source image representation to a second process. Such processes could be any of applications, system processes, and hardware devices, for example. The term "process" as used herein preferably connotes either a software unit (typically at the point of being executed), such as an application or operating system, or a thread of execution of a particular processor or operating system.

By assigning different layers to different processes, each process can control the resolution and other features of their graphical output independently of each other.

Preferably the means operating one the source image representations are adapted to manage a frame of audio/visual data as one of the source image representations. Such audio/visual data could be a frame of decoded MPEG data, for example. Preferably the method is carried out at a frequency corresponding to a video frame rate, such that the sequence of output images created by the method form part of a continuous audio/visual output, for display on a television or other display device, for example.

The invention can thus be applied to "animated" sources, by breaking such sources into sequences of frames, as well as "still" sources.

Preferably at least five image representations are provided, but more than 1, 2, 3, 5 or 10 separate image representations may be combined.

The receiver/decoder preferably further comprises means for sending an event when the output resolution is changed. The event is preferably sent to a process associated with at least one of the source image representations, and is preferably sent to further processes. By sending an event, higher level processes, for example, can be kept informed of the current output resolution with minimal intervention with the lower level processes which are responsible for changing the output resolution.

The receiver/decoder preferably further comprises means for modifying the resolution of at least one source image representation in response to a change in the output resolution. The means for modifying the resolution of at least one source image representation preferably operates in response to the receipt of an event as described above, and is preferably carried out by at least one process (such as an application) associated with the at least one source image representation. The resolution of the at least one source image representation is preferably set to be equal to the new output resolution, but otherwise may be increased or decreased to form a more convenient multiple of the output resolution. For example, the resolution might be set to 720 × 480 if the output resolution were set to 1440 × 960, for example.

This can allow an application, for example, to respond to a change in output resolution using a minimal amount of information and independently of other applications. Preferably the resolution of the at least one source image representation is modified by a process associated with the at least one source image representation, preferably in response to an event notifying the process of the change in output resolution.

Preferably the receiver/decoder is adapted to support at least one of a MPEG video layer, a background layer, a cursor layer, a graphic layer, and a subtitle layer as at least one source image representation. Other layers may of course be provided, and more than one layer of any particular type may be provided.

Preferably at least one of the resolutions corresponds to a standard television display resolution. In particular, the resolutions are preferably one of 720 × 480,1080 × 720, and 1920 × 1080 pixels, either interlaced or progressive, and preferably the resolutions are as defined for ATSC-specified high definition streams.

Preferably, the receiver/decoder comprises means for sensing a change in the resolution of the video data, and based on that change, determining whether the resolution of at least one of the source image representations requires modification, and, if so, modifying the resolution of the at least one source image representation.

In another aspect of the invention, there is provided a receiver/decoder comprising a receiver and a processor and associated memory, the receiver being adapted to receive an audio/visual bit stream at a given input resolution, and the processor being adapted to select an output resolution to be applied to an output representation of the audio/visual bit stream.

The processor is preferably adapted to select a different resolution to the input resolution, and may alternatively or further be adapted to select a new output resolution in response to a change in input resolution.

The receiver/decoder preferably further comprises the same or a further receiver, such same or further receiver being adapted to receive data governing a choice of resolutions, the processor then being adapted to select the output resolution in accordance with the received data. In this case, the data governing a choice of resolutions preferably comprises a list of acceptable resolutions.

The processor is preferably adapted to transform a plurality of source image representations of which at least one has a different resolution into intermediate image representations having the given output resolution, and to combine the intermediate image representations thus obtained to form an output image representation having the output resolution.

This important feature is also provided independently. Accordingly, in a further aspect of the invention, there is provided a receiver/decoder comprising a processor and associated memory, the processor being adapted to transform a plurality of source image representations of which at least one has a different resolution into intermediate image representations having an output resolution, and to combine the image representations thus obtained to form an output image representation having the output resolution.

The processor may be adapted to maintain at the same resolution at least one source image representation during the transformation step. Furthermore, the processor may be adapted to modify at least one of the source image representations, and again to transform the plurality of source image representations and to combine the image representations thus obtained.

The processor may be adapted to assign at least one source image representation to a first process and to assign at least one further source image representation to a second process. The processor may further be adapted to send an event when the output resolution is changed. The processor is preferably adapted to modify the resolution of at least one source image representation in response to a change in the output resolution, and the processor may be adapted to support as at least one source image representation at least one of a MPEG video layer, a background layer, a cursor layer, a graphic layer, and a subtitle layer.

Preferably at least one of the resolutions corresponds to a standard television display resolution.

In a yet further aspect of the invention, there is provided a method of outputting a representation of an audio/visual bit stream, comprising receiving the audio/visual bit stream at a given input resolution, and selecting an output resolution to be applied to the representation of the audio/visual bit stream.

The method preferably further comprises receiving an audiovisual bit stream at a given input resolution, and selecting an output resolution to be applied to an output representation of the audiovisual bit stream. The step of selecting an output resolution preferably comprises selecting a different resolution to the input resolution.

The step of selecting an output resolution may comprise selecting a new output resolution in response to a change in input resolution. Furthermore, the method may further comprise receiving data governing a choice of resolutions, the step of selecting an output resolution then being adapted to select the output resolution in accordance with the received data. Preferably, the data governing a choice of resolutions comprises a list of acceptable resolutions.

The method may comprise transforming a plurality of source image representations of which at least one has a different resolution into intermediate image representations having the given output resolution, and combining the intermediate image representations thus obtained to form an output image representation having the output resolution.

This important feature is also provided independently. Accordingly, in another aspect of the invention, there is provided a method of outputting an output image representation having an output resolution, comprising transforming a plurality of source image representations of which at least one has a different resolution into intermediate image representations having the output resolution, and combining the image representations thus obtained to form the output image representation.

The step of transforming a plurality of source image representations preferably comprises maintaining at the same resolution at least one source image representation during the transformation step. Further, the method preferably further comprises modifying at least one of the source image representations, and repeating the transforming and combining steps.

Preferably the method further comprises assigning at least one source image representation to a first process and assigning at least one further source image representation to a second process. The method may further comprise sending an event when the output resolution is changed, and the method may also comprise modifying the resolution of at least one source image representation in response to a change in the output resolution.

The method preferably comprises supporting as at least one source image representation at least one of a MPEG video layer, a background layer, a cursor layer, a graphic layer, and a subtitle layer. Preferably at least one of the resolutions corresponds to a standard television display resolution.

In a further aspect of the invention, there is provided apparatus for outputting a representation of an audio/visual bit stream at an output resolution, comprising means for receiving an audio/visual bit stream at a given input resolution, and means for selecting the output resolution to be applied to the representation of the audio/visual bit stream.

Preferably the means for selecting an output resolution is adapted to select a different resolution to the input resolution. Furthermore, the means for selecting an output resolution is preferably adapted to select a new output resolution in response to a change in input resolution. The apparatus may further comprise means for receiving data governing a choice of resolutions, the means for selecting an output resolution being adapted to select the output resolution in accordance with the received data. Preferably the data governing a choice of resolutions comprises a list of acceptable resolutions.

The apparatus may further comprise means for transforming a plurality of source image representations of which at least one has a different resolution into intermediate image representations having the given output resolution, and means for combining the intermediate image representations thus obtained to form an output image representation having the output resolution.

This important feature is also provided independently. Accordingly, in a further aspect of the invention, there is provided apparatus, comprising means for transforming a plurality of source image representations of which at least one has a different resolution into intermediate image representations having a given output resolution, and means for combining the intermediate image representations thus obtained to form an output image representation having the output resolution.

Preferably the means for transforming a plurality of source image representations is adapted to maintain at the same resolution at least one source image representation during the transformation step.

The apparatus may further comprise means for modifying at least one of the source image representations, and means for repeating the transforming and combining steps. More preferably, the apparatus may further comprise means for assigning at least one source image representation to a first process and means for assigning at least one further source image representation to a second process. The apparatus may further comprise means for sending an event when the output resolution is changed, and may further comprise means for modifying the resolution of at least one source image representation in response to a change in the output resolution.

The apparatus may be adapted to support as at least one source image representation at least one of a MPEG video layer, a background layer, a cursor layer, a graphic layer, and a subtitle layer. Preferably at least one of the resolutions corresponds to a standard television display resolution.

In a yet further aspect of the invention, there is provided a computer program product adapted to perform any of the methods as aforesaid.

In another aspect of the invention, there is provided a computer program product for outputting a representation of an audio/visual bit stream at an output resolution, comprising means for receiving an audio/visual bit stream at a given input resolution, and means for selecting the output resolution to be applied to the representation of the audio/visual bit stream.

Preferably the means for selecting an output resolution is adapted to select a different resolution to the input resolution. Furthermore, the means for selecting an output resolution is preferably adapted to select a new output resolution in response to a change in input resolution. The computer program product may further comprise means for receiving data governing a choice of resolutions, the means for selecting an output resolution being adapted to select the output resolution in accordance with the received data. Preferably the data governing a choice of resolutions comprises a list of acceptable resolutions.

The computer program product may further comprise means for transforming a plurality of source image representations of which at least one has a different resolution into intermediate image representations having the given output resolution, and means for combining the intermediate image representations thus obtained to form an output image representation having the output resolution.

This important feature is also provided independently. Accordingly, in a further aspect of the invention, there is provided a computer program product, comprising means for transforming a plurality of source image representations of which at least one has a different resolution into intermediate image representations having a given output resolution, and means for combining the intermediate image representations thus obtained to form an output image representation having the output resolution.

Preferably the means for transforming a plurality of source image representations is adapted to maintain at the same resolution at least one source image representation during the transformation step.

The computer program product may further comprise means for modifying at least one of the source image representations, and means for repeating the transforming and combining steps. More preferably, the computer program product may further comprise means for assigning at least one source image representation to a first process and means for assigning at least one further source image representation to a second process. The computer program product may further comprise means for sending an event when the output resolution is changed, and may further comprise means for modifying the resolution of at least one source image representation in response to a change in the output resolution.

The computer program product may be adapted to support as at least one source image representation at least one of a MPEG video layer, a background layer, a cursor layer, a graphic layer, and a subtitle layer. Preferably at least one of the resolutions corresponds to a standard television display resolution.

In a further aspect of the invention, there is provided a computer readable medium tangibly embodying a computer program product as aforesaid.

In another aspect of the invention, there is provided a signal tangibly embodying a computer program product as aforesaid.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

The invention extends to methods and/or apparatus substantially as herein described with reference to the accompanying drawings.

Any feature in one aspect of the invention may be applied to other aspects of the invention, in any appropriate combination. In particular, method aspects may be applied to apparatus aspects, and vice versa.

Furthermore, features implemented in hardware may generally be implemented in software, and vice versa. Any reference to software and hardware features herein should be construed accordingly.

Preferred features of the present invention will now be described, purely by way of example, with reference to the accompanying drawings, in which:-
Figure 1 is an overview of a satellite digital television system;
Figure 2 is an overview of a cable digital television system;
Figure 3 is an overall system view, with the head-end shown in more detail;
Figure 4 is a schematic of the component architecture of the receiver/decoder;
Figure 5 is a diagram of the software architecture of the receiver/decoder;
Figure 6 is a diagram showing the top half of Figure 5 in more detail;
Figure 7 is a diagram showing the bottom half of Figure 5 in more detail;
Figure 8 is a diagram showing an alternative embodiment of the bottom half of Figure 5;
Figure 9 is a block diagram of video sub-systems in the receiver/decoder;
Figure 10 is an illustration of the combination of different graphics layers to form an output image;
Figures 11 (a) to 11 (d) are illustrations of the different modes of operation of the graphics system;
Figure 12 is a flowchart of the steps performed when the resolution management system is initialised;
Figure 13 is a flowchart of the steps performed when the resolution of the incoming bit stream changes;
Figure 14 is a flowchart of the steps performed when a new output resolution is selected;
Figure 15 is a flowchart of the steps performed when calculating a 'best' resolution; and
Figure 16 is a schematic illustrating the resolution management system in operation.

### System overview

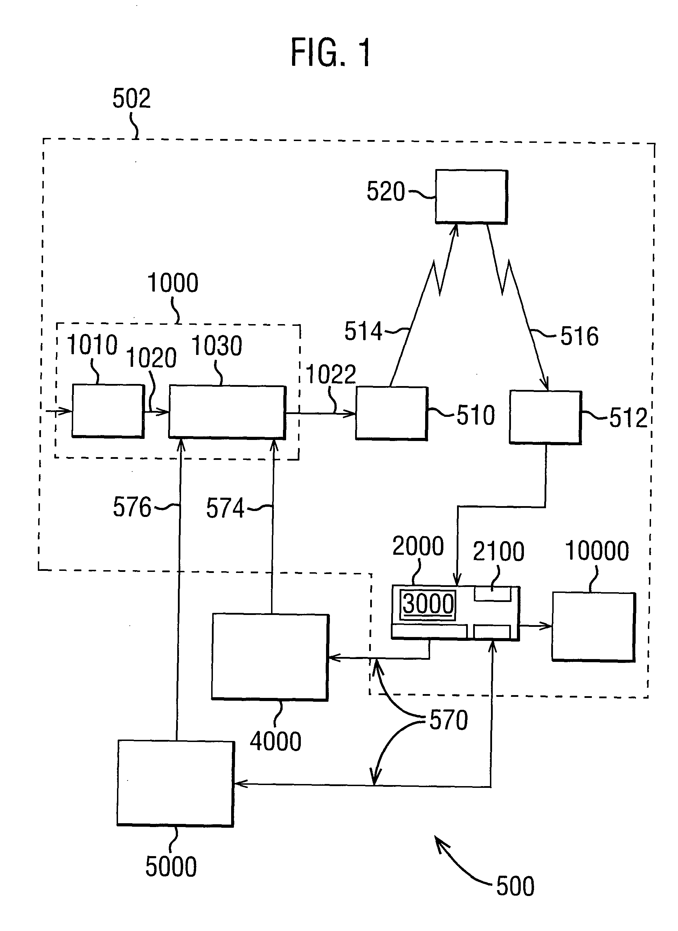

An overview of a digital television system 500 is shown in Figure 1. As will be discussed below, the system 500 comprises a broadcast centre 1000, a receiver/decoder 2000, a software/hardware architecture 3000 of the receiver/decoder, an interactive system 4000, and a conditional access system 5000, as will all be discussed below.

The system 500 includes a mostly conventional digital television system 502 that uses the known MPEG-2 compression system to transmit compressed digital signals. In more detail, MPEG-2 compressor 1010 in a broadcast centre 1000 receives a digital signal stream (typically a stream of video signals). The compressor 1010 is connected by linkage 1020 to a multiplexer and scrambler 1030.

The multiplexer 1030 receives a plurality of further input signals, assembles the transport stream and transmits compressed digital signals to a transmitter 510 of the broadcast centre via linkage 1022, which can of course take a wide variety of forms including telecommunications links. The transmitter 510 transmits electromagnetic signals via uplink 514 towards a satellite transponder 520, where they are electronically processed and broadcast via notional downlink 516 to earth receiver 512, conventionally in the form of a dish owned or rented by the end user. Other transport channels for transmission of the data are of course possible, such as terrestrial broadcast, cable transmission, combined satellite/cable links, telephone networks etc.

The signals received by receiver 512 are transmitted to an integrated receiver/decoder 2000 owned or rented by the end user and connected to the end user's television set 10000. The receiver/decoder 2000 decodes the compressed MPEG-2 signal into a television signal for the television set 10000. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In the receiver/decoder 2000 a hard disk 2100 is provided, on which audiovisual and other data can be stored. This allows advanced recording and playback facilities for programmes received by the receiver/decoder, and also allows large amounts of other types of data, such as electronic programme guide data, to be stored in the receiver/decoder.

A content management and protection system (CMPS) 2300 (not shown) in the receiver/decoder provides the ability securely and flexibly to control the recording and playback of data on the hard disk 2100 (or other storage device).

In a multichannel system, the multiplexer 1030 handles audio and video information received from a number of parallel sources and interacts with the transmitter 510 to broadcast the information along a corresponding number of channels. In addition to audiovisual information, messages or applications or any other sort of digital data may be introduced in some or all of these channels interlaced with the transmitted digital audio and video information.

An interactive system 4000 is connected to the multiplexer 1030 and the receiver/decoder 2000, and is located partly in the broadcast centre and partly in the receiver/decoder. It enables the end user to interact with various applications via a back channel 570. The back channel may be, for example a Public Switched Telephone Network (PSTN) channel (for example, a modemmed back channel) or an Out of Band (OOB) channel.

A conditional access system 5000, also connected to the multiplexer 1030 and the receiver/decoder 2000 and again located partly in the broadcast centre and partly in the receiver/decoder, enables the end user to access digital television broadcasts from one or more broadcast suppliers. A smartcard, capable of deciphering messages relating to commercial offers (that is, one or several television programmes sold by the broadcast supplier), can be inserted into the receiver/decoder 2000. Using the receiver/decoder 2000 and smartcard, the end user may purchase commercial offers in either a subscription mode or a pay-per-view mode. Typically this is achieved using the back channel 570 which is used by the interactive system 4000.

As mentioned above, programmes transmitted by the system are scrambled at the multiplexer 1030, the conditions and encryption keys applied to a given transmission being determined by the access control system 5000. Transmission of scrambled data in this way is well known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the receiver/decoder 2000 having access to an equivalent to the exploitation key stored on a smartcard inserted in the receiver/decoder to decrypt the encrypted control word and thereafter descramble the transmitted data. A paid-up subscriber will receive, for example, in a broadcast monthly EMM (Entitlement Management Message) the exploitation key necessary to decrypt the encrypted control word so as to permit viewing of the transmission.

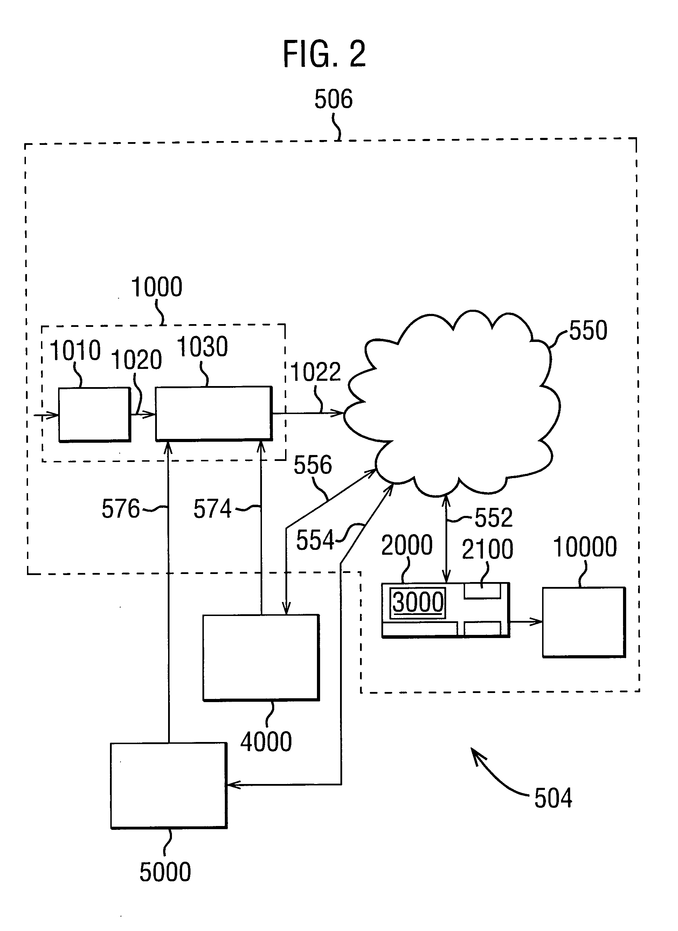

Figure 2 illustrates an alternative embodiment of a digital television system 504, utilising a cable network as the broadcast medium for the compressed digital signals. In this figure, like parts are indicated with like numerals.

The satellite transponder and transmitting and receiving stations are replaced by a cable network 550. Additionally, in this particular embodiment, the modemmed back channel between the receiver/decoder 2000 and the interactive system 4000 and conditional access system 5000 is removed, replaced by linkages 554,556 between the cable network 550 and the conditional access system 5000 and interactive system 4000 respectively. The receiver/decoder 2000 thus communicates with the other systems via the cable network 550, utilising a cable modem or other means to allow it to send and receive data via the same link as it receives data from the broadcast centre.

The cable network 550 may be any form of wide area network (WAN), such as a dedicated connection, the internet, local cable distribution network, wireless connection, or any combination of the above. In the present embodiment, the hybrid fibre coax (HFC) network is used. It is appreciated that the various means of communication between the receiver/decoder 2000 and the other components of the television system are interchangeable.

### Conditional access system

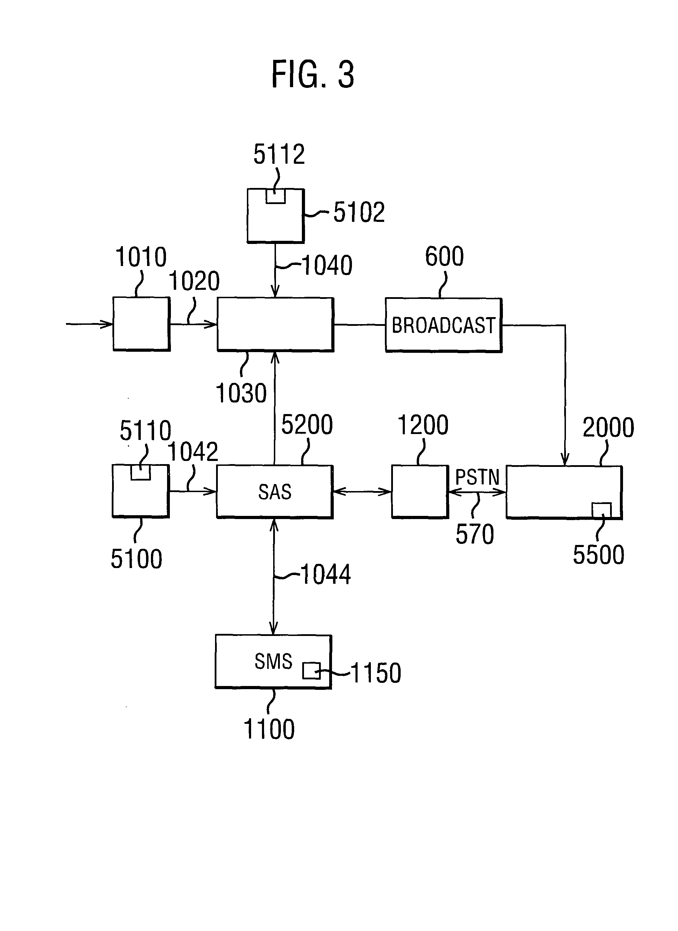

With reference to Figure 3, in overview the conditional access system 5000 includes a Subscriber Authorization System (SAS) 5200. The SAS 5200 is connected to one or more Subscriber Management Systems (SMS) 1100, one SMS for each broadcast supplier, by a link 1044, which may be a TCP-IP link or other type of link. Alternatively, one SMS could be shared between two commercial operators, or one operator could use two SMSs, and so on.

First encrypting units in the form of ciphering units 5100 utilising "mother" smartcards 5110 are connected to the SAS by linkage 1042. Second encrypting units again in the form of ciphering units 5102 utilising mother smartcards 5112 are connected to the multiplexer 1030 by linkage 1040. The receiver/decoder 2000 receives a "daughter" smartcard 5500. The receiver/decoder is connected directly to the SAS 5200 via communications servers 1200 and the modemmed back channel 570. The SAS sends amongst other things subscription rights to the daughter smartcard on request.

In variants of the preferred embodiment, internet or cable connections either complement or replace the PSTN 570 and communications servers 1200.

The smartcards contain confidential information from one or more commercial operators. The "mother" smartcard encrypts different kinds of messages and the "daughter" smartcards decrypt the messages, if they have the rights to do so.

With reference to Figure 3, in the broadcast centre, the digital video signal is first compressed (or bit rate reduced), using the MPEG-2 compressor 1010. This compressed signal is then transmitted to the multiplexer and scrambler 1030 in order to be multiplexed with other data, such as other compressed data.

The scrambler generates a control word used in the scrambling process and included in the MPEG-2 stream in the multiplexer 1030. The control word is generated internally and enables the end user's integrated receiver/decoder 2000 to descramble the programme.

Access criteria, indicating how the programme is commercialised, are also added to the MPEG-2 stream. The programme may be commercialised in either one of a number of "subscription" modes and/or one of a number of "Pay Per View" (PPV) modes or events. In the subscription mode, the end user subscribes to one or more commercial offers, or "bouquets", thus getting the rights to watch every channel inside those bouquets. In the Pay Per View mode, the end user is provided with the capability to purchase events as he wishes.

Both the control word and the access criteria are used to build an Entitlement Control Message (ECM); this is a message sent in relation with one scrambled program; the message contains a control word (which allows for the descrambling of the program) and the access criteria of the broadcast program. The access criteria and control word are transmitted to the second encrypting unit 5102 via the linkage 1040. In this unit, an ECM is generated, encrypted and transmitted on to the multiplexer and scrambler 1030.

Each service broadcast by a broadcast supplier in a data stream comprises a number of distinct components; for example a television programme includes a video component, an audio component, a sub-title component and so on. Each of these components of a service is individually scrambled and encrypted for subsequent broadcast. In respect of each scrambled component of the service, a separate ECM is required.

The multiplexer 1030 receives electrical signals comprising encrypted EMMs from the SAS 5200, encrypted ECMs from the second encrypting unit 5102 and compressed programmes from the compressor 1010. The multiplexer 1030 scrambles the programmes and transmits the scrambled programmes, the encrypted EMMs and the encrypted ECMs as electric signals to broadcast system 600, which may be for example a satellite system as shown in Figure 1, or other broadcast system. The receiver/decoder 2000 demultiplexes the signals to obtain scrambled programmes with encrypted EMMs and encrypted ECMs.

The receiver/decoder receives the broadcast signal and extracts the MPEG-2 data stream. If a programme is scrambled, the receiver/decoder 2000 extracts the corresponding ECM from the MPEG-2 stream and passes the ECM to the "daughter" smartcard 5500 of the end user. This slots into a housing in the receiver/decoder 2000. The daughter smartcard 5500 controls whether the end user has the right to decrypt the ECM and to access the programme. If not, a negative status is passed to the receiver/decoder 2000 to indicate that the programme cannot be descrambled. If the end user does have the rights, the ECM is decrypted and the control word extracted. The decoder 2000 can then descramble the programme using this control word. The MPEG-2 stream is decompressed and translated into a video signal for onward transmission to television set 10000.

If the programme is not scrambled, no ECM will have been transmitted with the MPEG-2 stream and the receiver/decoder 2000 decompresses the data and transforms the signal into a video signal for transmission to television set 10000.

The subscriber management system (SMS) 1100 includes a database 1150 which manages, amongst others, all of the end user files, commercial offers (such as tariffs and promotions), subscriptions, PPV details, and data regarding end user consumption and authorization. The SMS may be physically remote from the SAS.

The SMS 1100 transmits messages to the SAS 5200 which imply modifications to or creations of Entitlement Management Messages (EMMs) to be transmitted to end users. The SMS 1100 also transmits messages to the SAS 5200 which imply no modifications or creations of EMMs but imply only a change in an end user's state (relating to the authorization granted to the end user when ordering products or to the amount that the end user will be charged). The SAS 5200 also sends messages (typically requesting information such as call-back information or billing information) to the SMS 1100, so that it will be apparent that communication between the two is two-way.

### Receiver/decoder

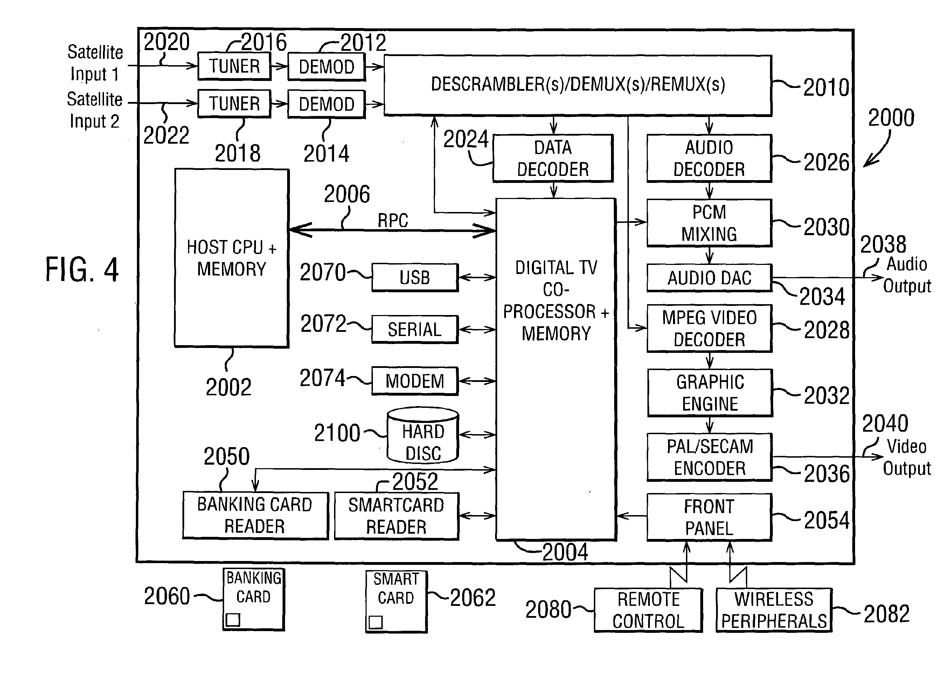

Referring to Figure 4, the various elements of receiver/decoder 2000 will now be described in terms of functional blocks.

The receiver/decoder 2000, which may be, for example, a digital set-top box (DSTB), comprises a central host processor 2002 and a digital TV coprocessor 2004, both having associated memory elements (not shown) and joined by a coprocessor bus 2006. The coprocessor 2004 is adapted to receive input data from a USB interface 2070, a serial interface 2072, a parallel interface (not shown), a modem 2074 (connected to the modem back channel 570 of Fig. 1), and switch contacts on the front panel 2054 of the decoder.

The receiver/decoder is additionally adapted to receive inputs from an infra-red remote control 2080 (and optionally from other wireless peripherals 2082 such as Bluetooth-enabled devices) and also possesses two smartcard readers 2050,2052 adapted to read bank and subscription smartcards 2060, 2062 respectively. The subscription smartcard reader 2052 engages with an inserted subscription card 2062 and with a conditional access unit (not shown) to supply the necessary control word to a demultiplexer/descrambler/remultiplexer unit 2010 to enable the encrypted broadcast signal to be descrambled. The decoder also includes a conventional tuner 2016 and demodulator 2012 to receive and demodulate the satellite transmission before being filtered and demultiplexed by the demodulator/descrambler unit 2010. A second tuner 2018 and second demodulator 2014 are also provided, to allow, amongst other things, a second channel to be received and decoded in parallel with the first.

A hard disk 2100 is also provided, allowing storage of programme and application data received and generated by the receiver/decoder. In conjunction with the two tuners 2016, 2018, two demodulators 2012,2014, the descrambler/demultiplexer/remultiplexer 2010, and the data decoder 2024 and audio decoder 2026, advanced recording and playback features are provided, allowing simultaneous recordings of one or more programmes while a further programme is being viewed, and more general transfers to and from the hard disk to and from the display devices and/or inputs and outputs, all occurring in parallel.

The audio output 2038 and video output 2040 in the receiver/decoder are fed by the PCM mixer 2030 and audio DAC 2034, and the MPEG video decoder 2028, graphic engine 2032 and PAL/SECAM encoder 2036 respectively. Alternative or complementary outputs may of course be provided.

As used in this description, an application is preferably a piece of computer code for controlling high level functions of preferably the receiver/decoder 2000. For example, when the end user positions the focus of remote control 2080 on a button object seen on the screen of the television set (not shown) and presses a validation key, the instruction sequence associated with the button is run. Applications and the associated middleware are executed by the host processor 2002, with remote procedure calls (RPCs) being made to the digital TV coprocessor 2004 across the coprocessor bus 2006 as and when required.

An interactive application proposes menus and executes commands at the request of the end user and provides data related to the purpose of the application. Applications may be either resident applications, that is, stored in the ROM (or FLASH or other non-volatile memory) of the receiver/decoder 2000, or broadcast and downloaded into the RAM, FLASH memory or hard disk of the receiver/decoder 2000.

Applications are stored in memory locations in the receiver/decoder 2000 and represented as resource files. The resource files comprise graphic object description unit files, variables block unit files, instruction sequence files, application files and data files.

The receiver/decoder contains memory (not shown) divided into at least one RAM volume, a FLASH volume and at least one ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

### Architecture of receiver/decoder

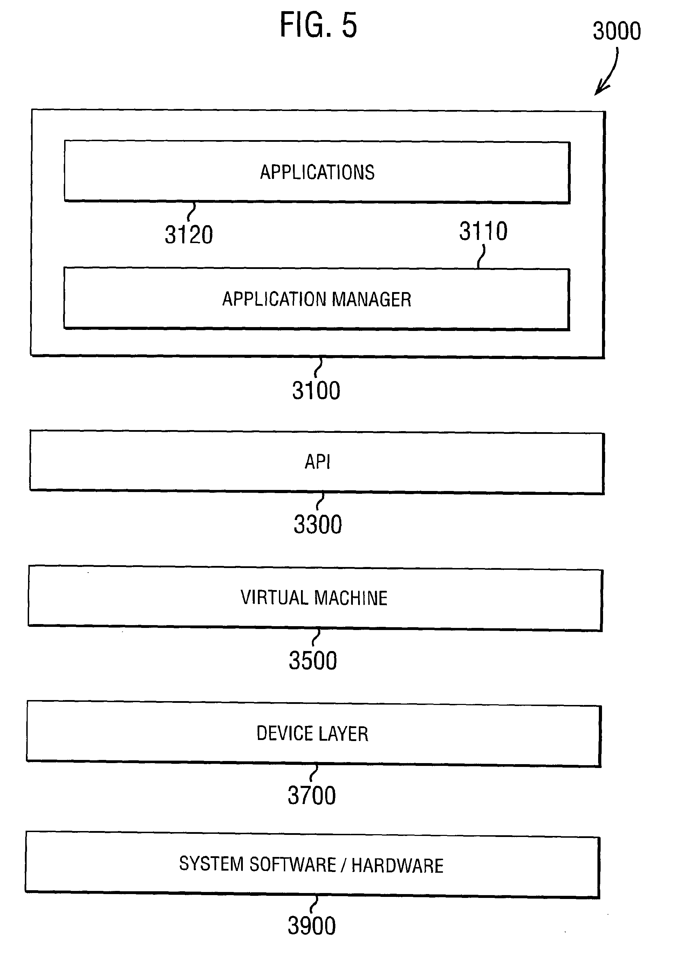

With reference to Figure 5, the software/hardware architecture 3000 of the receiver/decoder contains five software layers, organized so that the software can be implemented in any receiver/decoder and with any operating system. The various software layers are application layer 3100, application programming interface (API) layer 3300, virtual machine layer 3500, device interface layer 3700 (often abbreviated just to 'device layer') and system software/hardware layer 3900.

The application layer 3100 encompasses applications 3120 that are either resident in or downloaded to the receiver/decoder. They may be interactive applications used by customers, written in, for example, Java, HTML, MHEG-5 or other languages, or they may be applications used by the receiver/decoder for other purposes, for example for running such interactive applications. This layer is based on a set of open Application Programming Interfaces (APIs) provided by the Virtual Machine layer. This system allows applications to be downloaded to the hard disk, flash memory or RAM memory in the receiver/decoder on-the-fly or on demand. The application code can be transmitted in compressed or uncompressed format using protocols such as Data Storage Media Command and Control (DSMCC), Network File Server (NFS) or other protocols.

The API layer 3300 provides high-level utilities for interactive application development. It includes several packages that make up this high-level API. The packages provide all the functionality necessary to run interactive applications. The packages are accessible by the applications.

In a preferred embodiment the API is adapted for applications written in the Java, PanTalk or such similar programming languages. Furthermore, it can facilitate the interpretation of HTML and other formats, such as MHEG-5. Besides these features, it also includes other packages and service modules that are detachable and extensible as requirements dictate.

The virtual machine layer 3500 is composed of language interpreters and various modules and systems. This layer, managed by a kernel 3650 (not shown), consists of everything necessary to receive and execute interactive applications in the receiver/decoder.

The device interface layer 3700 includes a Device Manager and software devices (generally referred to herein as just 'devices'). Devices are software modules which consist of the logical resources necessary for management of external events and physical interfaces. The device interface layer, under the control of the Device Manager, manages communication channels between drivers and applications and provides enhanced error exception checking. Some examples of managed (hardware) devices are: card readers 3722 (not shown), modems 3730 (not shown), network 3732 (not shown), PCMCIA (Personal Computer Memory Card International Association), LED display and so on. Programmers do not have to deal with this layer directly, since the API layer controls the devices from above.

The system software/hardware layer 3900 is provided by the manufacturer of the receiver/decoder. Because of the modularity of the system and because services supplied by the higher-level operating system (such as event scheduling and memory management) are part of the virtual machine and kernel, the higher layers are not tied to a particular real-time operating system (RTOS) or to a particular processor.

Typically the virtual machine layer 3500, occasionally in combination with the device interface layer 3700 and/or API 3300, is referred to as the 'middleware' of the receiver/decoder.

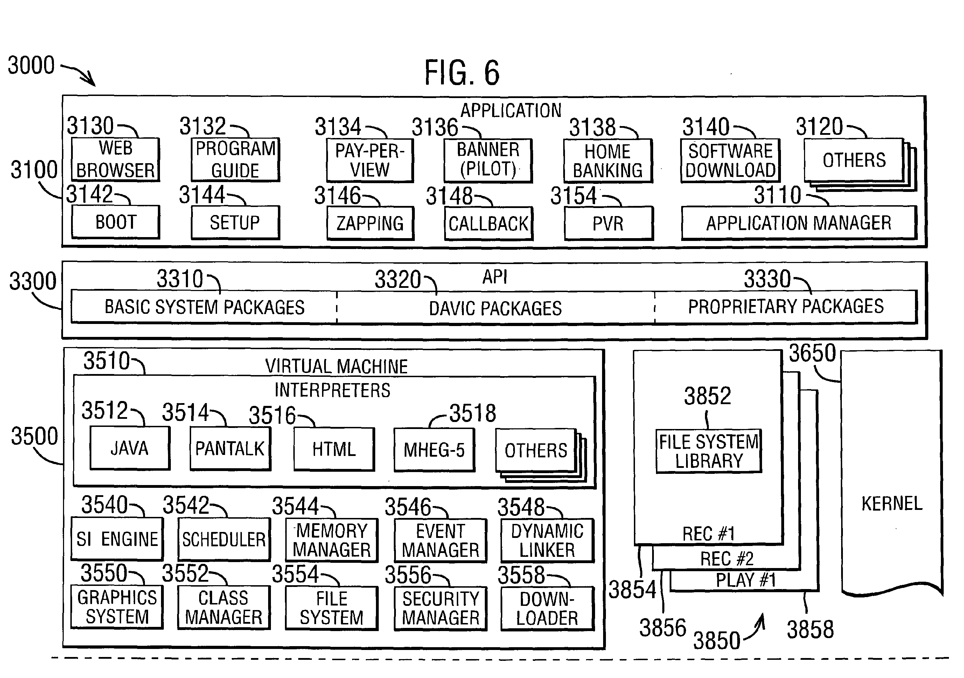

With reference to Figure 6 the software architecture of the receiver/decoder 3000 corresponding to the top half of Figure 5 (comprising the application layer 3100, API layer 3300 and virtual machine layer 3500) will now be described in more detail.

Interactive applications are applications that the user interacts with, for example, to obtain products and services, such as electronic program guides, telebanking applications and games.

There are two types of application in the application layer 3100, plus the Application Manager 3110. There are interactive applications such as a Web Browser 3130 which can be added at any time as long as they conform to the API 3300, and there are resident applications which manage and support the interactive applications. The resident applications are substantially permanent and include the following:
- Boot. The Boot application 3142 is the first application launched when the receiver/decoder is powered on. The Boot application first starts the Application Manager 3110, and then starts the "Manager" software modules in the virtual machine 3500, such as the Memory Manager 3544 and the Event Manager 3546.
- Application Manager. The Application Manager 3110 manages the interactive applications that are run in the receiver/decoder, that is, it starts, stops, suspends, resumes, handles events and deals with communication between applications. It allows multiple applications to run at once, and thus is involved in the allocation of resources among them. This application is completely transparent to the user.
- SetUp. The purpose of the SetUp application 3144 is to configure the receiver/decoder, primarily the first time it is used. It performs actions such as scanning for TV channels, setting the date and time, establishing user preferences, and so on. However, the SetUp application can be used at any time by the user to change the receiver/decoder configuration.
- Zapping. The Zapping application 3146 is used to change channels using the Program-up, Program-down and numeric keys. When another form of zapping is used, for example, through a banner (pilot) application, the Zapping application is stopped.
- Callback. The Callback application 3148 is used to extract the values of various parameters stored in the receiver/decoder memory and return these values to the commercial operator via modemmed back channel 1070 (not shown), or by other means.

Other applications in the application layer 3100 include a program guide application 3132, a pay-per-view application 3134, a banner (pilot) application 3136, a home banking application 3138, a software download application 3140 and a PVR (personal video recorder) application 3154 (see below).

As noted above, the Application Programming Interface (API) layer 3300 contains several packages. These include basic system packages 3310, used, for example, to access basic features of the virtual machine, DAVIC packages 3320, and proprietary packages 3330, used to access features ofthe software architecture unique to the principal software vendor.

Considered in more detail, the virtual machine 3500 includes the following:
- Language Interpreters 3510. Different interpreters can be installed to conform to the type of applications to be read. These include Java interpreters 3512, PanTalk interpreters 3514, HTML interpreters 3516, MHEG-5 interpreters 3518 and others.
- Service Information (SI) Engine. The SI Engine 3540 loads and monitors common Digital Video Broadcasting (DVB) or Program System Information Protocol (PSIP) tables and puts them into a cache. It allows access to these tables by applications which need the data contained in them.
- Scheduler 3542. This module allows for pre-emptive, multithreaded scheduling with each thread having its own event queue.
- Memory Manager 3544. This module manages the access to memory. It also automatically compresses data in memory when necessary and performs automatic garbage collection.
- Event Manager 3546. This module allows events to be triggered according to priority. It manages timer and event grabbing and allows applications to send events to each other.
- Dynamic Linker 3548. This module allows the resolution of addresses arising from native Java functions, loads native methods from a Java class downloaded into RAM and resolves calls from downloaded native codes towards ROM.
- Graphics System 3550. This system is object-orientated and optimized. It includes graphic window and object management as well as a vectorial font engine with multi-language support.
- Class Manager 3552. This module loads classes and resolves any class referencing problems.
- File System 3554. This module is compact and optimized to manage a hierarchical file system with multiple ROM, flash, RAM and DSMCC volumes. Flash integrity is guaranteed against any incidents.
- Security Manager 3556. This module authenticates applications and controls the access of applications to sensitive memory and other zones of the set-top box.
- Downloader 3558. This module uses automatic data loading from a remote DSMCC carousel or through the NFS protocol, with downloaded files accessed in the same way as resident ones. Memory clear-up, compression and authentication are also provided.

Furthermore, the DAVIC resource notification model is supported so that client resources are efficiently managed.

A kernel 3650 manages the various different processes running in the virtual machine 3500 and device interface layer 3700 (not shown). For efficiency and reliability reasons, the kernel implements relevant parts of the POSIX standard for operating systems.

Under control of the kernel, the virtual machine (running Java and Pantalk applications) runs in its own thread, separate to other 'server' elements of the operating system, such as the mass storage server 3850 (not shown). Corresponding provisions, such as requiring Thread IDs to be passed as parameters in system calls, are also made in the API layer 3300 to allow the applications 3120 to benefit from the multithreaded environment.

By providing multiple threads, more stability can be achieved. For example, if the virtual machine 3500 ceases to operate for some reason, by suffering a crash or being blocked for a long time by an application trying to access a device, other time-critical parts of the system, such as the hard disk server, can continue to operate.

As well as the virtual machine 3500 and kernel 3650, a hard disk video recorder (HDVR) module 3850 is provided for handling the recording and playback functions of the hard disk 2210 or other attached mass storage component. The server comprises two separate threads 3854,3856 handling recording, one thread 3858 for handling playback, and a file system library 3852 for interfacing with the mass storage components.

An appropriate one of the threads 3854, 3856, 3858 in the hard disk video recorder (HDVR) 3850 receives commands (such as a command to start recording a particular programme) from clients such as the personal video recorder (PVR) application 3154, in response to the user pressing a 'record' button, for example.

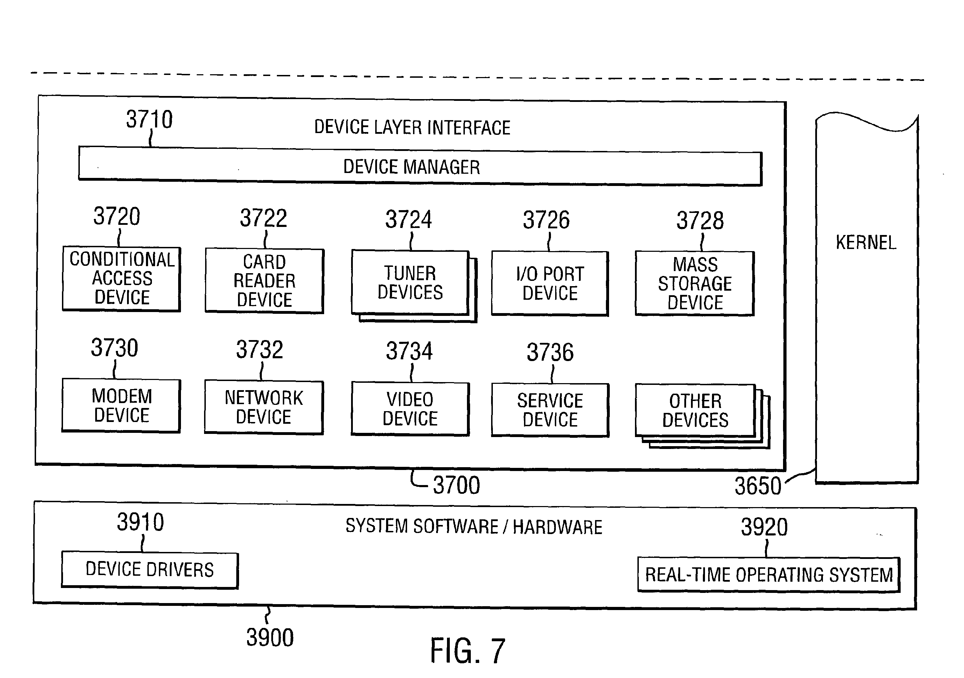

In turn, the thread in question then interacts with the service device 3736 (shown in Figure 7) to set up and synchronise the parts of the receiver/decoder handling the bitstream to be recorded or played back. In parallel, the thread also interacts with the file system library 3852 to coordinate the recording or playback operation at appropriate places on the hard disk 2210 (not shown).

The file system library 3852 then sends commands to the mass storage device 3728 (also shown in Figure 7) which tell the mass storage device 3728 which sub-transport stream (STS) to transfer (via a FIFO buffer), and on which hard disk target the stream should be stored. Allocation of clusters on the hard disk and general file management is carried out by the file system library 3852, the mass storage device itself being concerned with lower level operations.

The service device 3736 mentioned above is unique amongst the devices in that it does not relate to a physical component of the receiver/decoder. It instead provides a high level interface which groups together in a single 'instance' the various sets of tuner, demultiplexer, remultiplexer and hard disk devices in the receiver/decoder, freeing higher level processes from the difficulties of coordinating the various sub-devices.

With reference to Figure 7 the software architecture of the receiver/decoder 3000 corresponding to the bottom half of Figure 5 (comprising the device interface layer 3700 and the system software and hardware layer 3900) will now be described in more detail.

Further devices provided in the device layer include the conditional access device 3720, tuner devices 3724 corresponding to the two (or potentially more) tuners 2016, 2018 of Figure 4, the video device 3734, the I/O port device 3726, and the service device 3736 and mass storage device 3728 mentioned above.

In broad terms, a device can be regarded as defining a logical interface, so that two different devices may be coupled to a common physical port. Certain devices may communicate among themselves, and all devices also operate under the control of the kernel 3650.

Before using the services of any device, a program (such as an application instruction sequence) has to be declared as a "client", that is, a logical access-way to the device or the device manager 3710. The manager gives the client a client number which is referred to in all accesses to the device. A device can have several clients, the number of clients for each device being specified depending on the type of device. A client is introduced to the device by a procedure "Device: Open Channel". This procedure assigns a client number to the client. A client can be taken out of the device manager 3710 client list by a procedure "Device: Close Channel".

The access to devices provided by the device manager 3710 can be either synchronous or asynchronous. For synchronous access, a procedure "Device: Call" is used. This is a means of accessing data which is immediately available or a functionality which does not involve waiting for the desired response. For asynchronous access, a procedure "Device: I/O" is used. This is a means of accessing data which involves waiting for a response, for example scanning tuner frequencies to find a multiplex or getting back a table from the MPEG stream. When the requested result is available, an event is put in the queue of the engine to signal its arrival. A further procedure "Device: Event" provides a means of managing unexpected events.

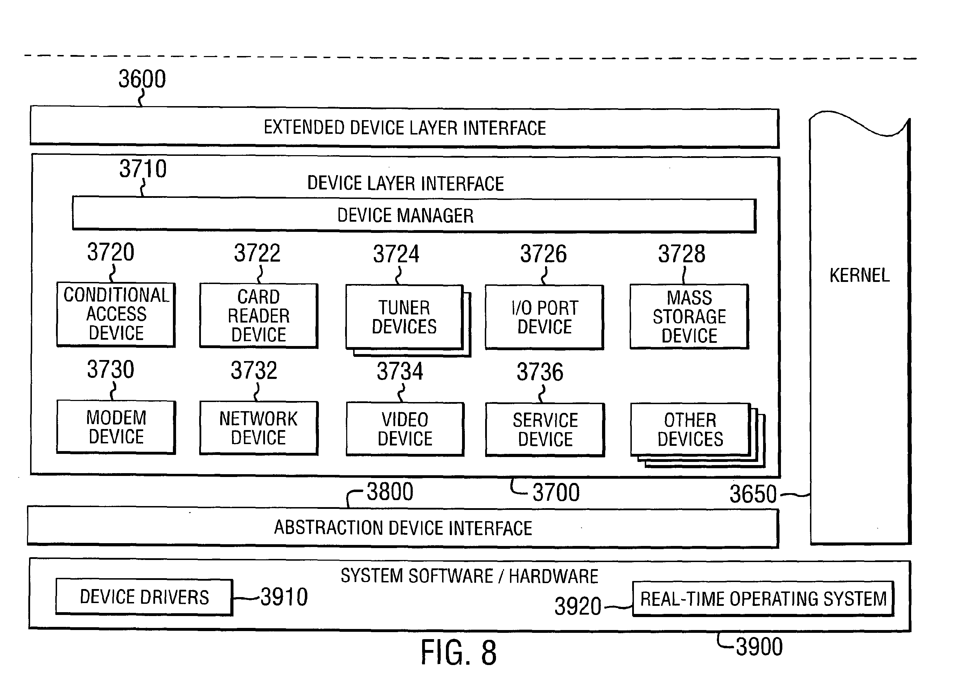

In a second embodiment of the receiver/decoder, the lower half of the architecture of the receiver/decoder is replaced by the layers shown in Figure 8.

In this embodiment, an extended device layer interface (EDLI) 3600 is provided between the virtual machine 3500 (not shown) and the device interface layer 3700, and an abstraction device interface 3800 is provided between the device interface layer 3700 and the system software/hardware layer 3900. Otherwise, like parts are indicated with like reference numerals.

The extended device layer interface (EDLI) 3600 provides a dedicated interface between the virtual machine 3500 and the device interface layer 3700 and generally provides multithreading support to the device interface layer. Functions of the EDLI include routing asynchronous events to the appropriate thread in the middleware (since the device interface layer need not itself support multithreading) and routing messages between threads.

The abstraction device interface 3800 provides a further interface between the device interface layer 3700 and the device drivers 3910 in the system software/hardware layer 3900. By providing such an interface, the large and complex device layer 3700 can be made hardware independent to a greater degree.

### Resolution management

In overview, the receiver/decoder 2000 is adapted to receive and output digital television signals broadcast in a variety of resolutions, and can be connected to display devices such as high definition televisions, which are capable of displaying a similar variety of resolutions.

In the receiver/decoder 2000, there are a number of graphics and video sources produced in hardware and by applications running in the receiver/decoder. The graphics engine 2032 (shown in Figure 4) is the component which performs the function of integrating all of these different sources (including the decoded digital television signal) into a single output source having a chosen output resolution.

In the preferred embodiment, these sources are divided into five image layers (in this specification, the term "image layer" is considered substantially interchangeable with the term "image representation"). Furthermore, each layer has associated with it a particular spatial resolution, corresponding to one of a standard range of resolutions, and a particular transparency (which is defined either locally - for each pixel - or globally - for the layer as a whole - or both). In the preferred embodiment, the standard range of resolutions comprise those defined in the ASTC high definition television standard, namely 720 × 480 pixels (interlaced), 720 × 480 pixels (progressive), 1080 × 720 pixels (progressive), 1920 × 1080 pixels (interlaced), and 1920 × 1080 pixels (progressive). These resolutions are more commonly referred to as 480i, 480p, 720p, 1080i and 1080p respectively. Other resolutions may of course be implemented.

Knowing the spatial resolutions, transparency and content of each layer, the graphics engine 2032 then combines the layers to form an output image, which is then displayed on the attached television or other display device.

The output resolution of the receiver/decoder can be varied, as with the image layers, between a standard range of resolutions. In certain modes of operation the resolution of the MPEG layer is fixed ("fixed mode"), and/or the output resolution is typically set as high as the connected television or other display device can handle (which in the case of non-high definition televisions is often only one resolution).

In other modes of operation, which are of greater interest in the present case, the resolution of the MPEG layer is set to dynamically follow changes in resolution of the decoded MPEG data ("following mode"), such changes typically being transitions between "standard" resolutions (such as 480i) and high-definition resolutions (such as 1080p), for example at the transition between a high-definition programme and low-definition advertisements. In these modes of operation the output resolution typically also follows the resolution of the decoded MPEG data.

For a receiver/decoder such as the present, with a high degree of abstraction between the hardware, middleware and application components, such changes in resolution can present problems, particularly since the complex interrelationship between the various software and hardware components of the receiver/decoder would at first sight suggest a simultaneous 'one-step' arbitrated solution for changing the resolution was required.

One solution to these problems is to have the hardware devices change the output resolution, based on information supplied by the resident software, and then send an event to the applications and other processes so that they can then adapt the resolution of any relevant image layers after the change of resolution. This can allow the independence to be maintained between the hardware and software layers, and the means of achieving this will be described in more detail below.

First of all, however, the five image layers and the processing performed on them by the graphics engine 2032, will briefly be described, as will be the different modes of operation described above.

### Formation of the television output

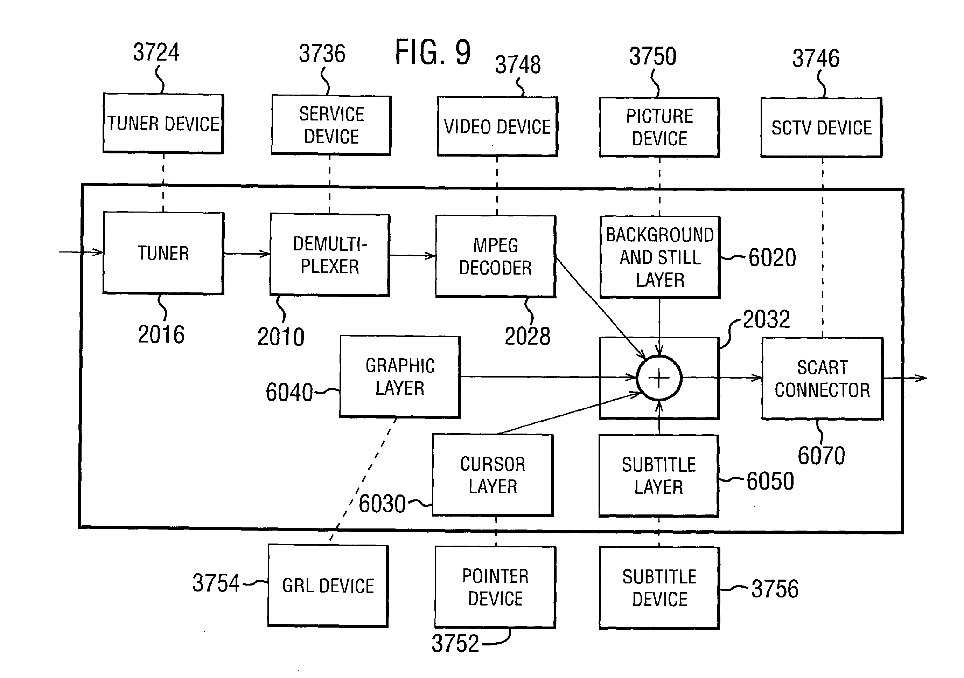

Figure 9 shows the principal components of the display system of the receiver/decoder in more detail, namely a tuner 2016 and demultiplexer 2010, graphics engine 2032, scart connector 6070, the MPEG decoder 2028 which produces the MPEG video layer 6010 (not shown), and the remaining four layers (a background and still layer 6020, cursor layer 6030, a graphic layer 6040 and one or more subtitle layers - here shown for simplicity as a single subtitle layer 6050) which are combined with the MPEG video layer 6010 by the graphics engine 2032. A second tuner 2018 and/or second demultiplexer 2012 (both shown in Figure 4) may alternatively be used.

In accordance with the software architecture outlined in more detail earlier, each hardware component has a corresponding device driver and/or device associated with it. In particular, the TUNER device 3724 is associated with the tuner 2016; the SERVICE device 3736 is principally associated with the demultiplexer 2010; the SCTV device controls the scart connector 6070; the VIDEO device 3734 is associated with the MPEG decoder 2028 which produces the MPEG video layer 6010; the PICTURE device 3750 is used to manipulate the background and still layer 6020; the POINTER device is used to manipulate the cursor layer 6030; the GRL device is used to manipulate the graphic layer 6040; and the SUBTITLE device is used to manipulate the subtitle layer 6050.

The various layers 6010, 6020, 6030, 6040, 6050, although shown separately in Figure 9, in fact correspond to different memory blocks inside a single unit of high-speed, preferably dual-ported, video RAM (not shown) which is shared between the various devices in the receiver/decoder. In variants of the preferred embodiment, however, different hardware devices and/or memory blocks are provided for different layers.

The processing ofthe various layers 6010,6020,6030,6040,6050 by the graphics engine 2032 will now be described in more detail.

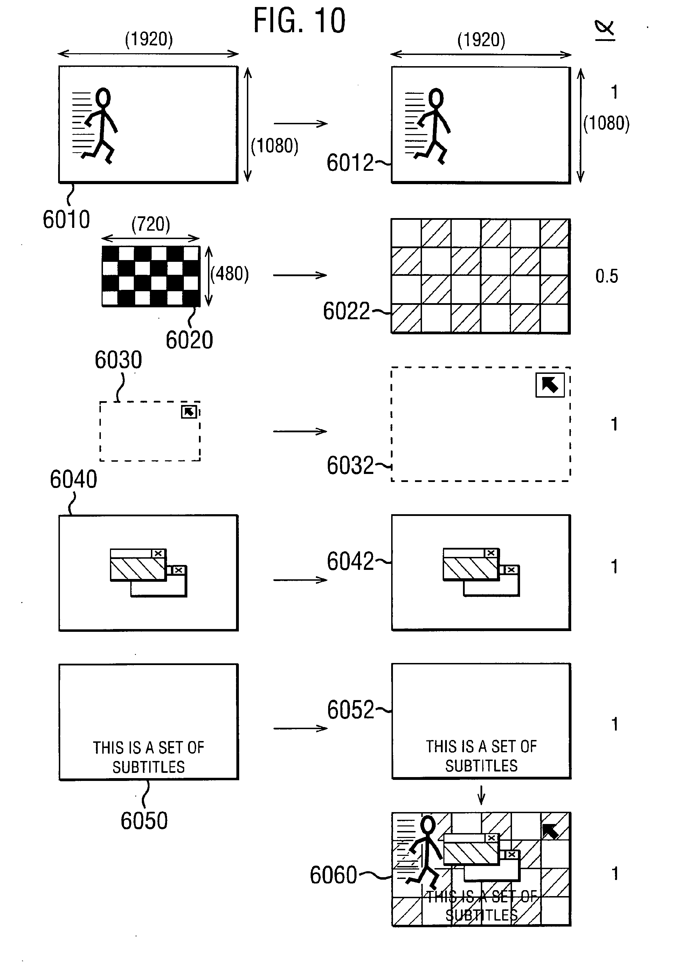

With reference to Figure 10, the five image layers in the receiver/decoder (MPEG source layer 6010, a backing and still layer 6020, a cursor layer 6030, a graphic layer 6040 and one or more subtitle layers - here shown as a single subtitle layer 6050) are again shown. The corresponding transformed layers 6012, 6022, 6032, 6042, 6052 are also shown, as well as the resulting composite output image 6060.

The MPEG source layer 6010 corresponds to a single frame of decoded MPEG output and changes every twenty-fifth or thirtieth of a second, for example, depending on the frame rate of the MPEG stream. To give the effect of the other layers being overlaid seamlessly on the decoded MPEG frames, the graphics engine 2032 (not shown) produces an output image every time the MPEG source layer changes (every thirtieth or fiftieth of a second in the present example).

As noted above, the spatial resolution and transparency of each of the layers can independently be manipulated. In the present case, the MPEG source layer 6010, graphic layer 6040 and subtitle layer 6050 are all set to a first resolution (1080p, or 1920 × 1080 pixels, progressive), and the background and still layer 6020 and the cursor layer 6030 are set to a second resolution (480i, or 720 × 480 pixels, interlaced). In Figure 9, the boxes 6010,6020,6030,6040,6050 are drawn at a constant resolution, that is to say that the size of the layer as drawn is indicative of the number of pixels in the layer, rather than indicative of the size of the layer as it would appear if displayed on a television, for example.

The cursor layer 6030 is a special case, as it is not full-size (for reasons of efficiency, since the cursor is essentially always small with respect to the overall screen size). The solid box indicates the actual extent of the layer in terms of pixels, and the dashed box indicates for the purpose of comparison the size of the layer if it were to cover the entire screen.

Every time the graphics engine 2032 (not shown) computes an output image, it transforms (where necessary) the five source layers into intermediate images each having the same spatial resolution as the output image. Thus, the MPEG source layer 6010, graphic layer 6040 and subtitle layer 6050 are unchanged but the background layer 6020 and cursor layer 6030 are upsized (in terms of the number of pixels) to have the same spatial resolution as the other layers 6010, 6040, 6050. Corresponding downsizing operations are performed for any layers which have a greater resolution than the output resolution.

The upsizing and downsizing methods make use of interpolation filters in order to create images having different sizes to the original. An anti-aliasing operation is also applied to the transformed images, but may be switched on or off for each layer under the control of the application.

In the preferred embodiment, each pixel in each layer has a red, green and blue component and also an 8-bit alpha component indicating relative transparency (0 is transparent, and 255 is fully opaque). In variants of the preferred embodiment, either a single transparency flag (such as a bit) is provided instead of the alpha component, or a special value of the red, green and blue components is used to indicate transparency. In further variants, a single colour component is provided for each pixel, one predetermined value of this component indicating transparency, and each colour component mapping to an entry in a colour palette table. Because of the standard graphics interface provided by the GRL (graphics) device 3754, however, the exact implementation of the storage of transparency and other information is left to the manufacturer of the receiver/decoder, and hidden from the sight of the applications using the GRL device.

Also in the preferred embodiment, each pixel of the output image is created by taking each corresponding pixel in each layer and mixing the pixels in a predefined order (MPEG source layer first, then subtitle(s), then background/still image, then graphic layer and then the cursor layer on top) using known alpha-blending algorithms which take account of the relative transparency of each pixel. In variants of the preferred embodiment, the combination of pixels is more straightforward, with the value of the output pixel being set to the value of the highest layer pixel which is not set to be transparent, thereby masking each image with respect to lower images.

For reasons of speed, the transformation and combination operations are, in fact, performed in the same operation by the graphics engine, eliminating the need for buffers to hold the transformed images before being combined, and also providing speed advantages. Due to the large amount of data being processed, the relevant parts of the graphics engine are implemented in hardware. In variants of the preferred embodiment, suitably fast digital signal processors are provided to undertake the relevant calculations in software.

### Modes of operation

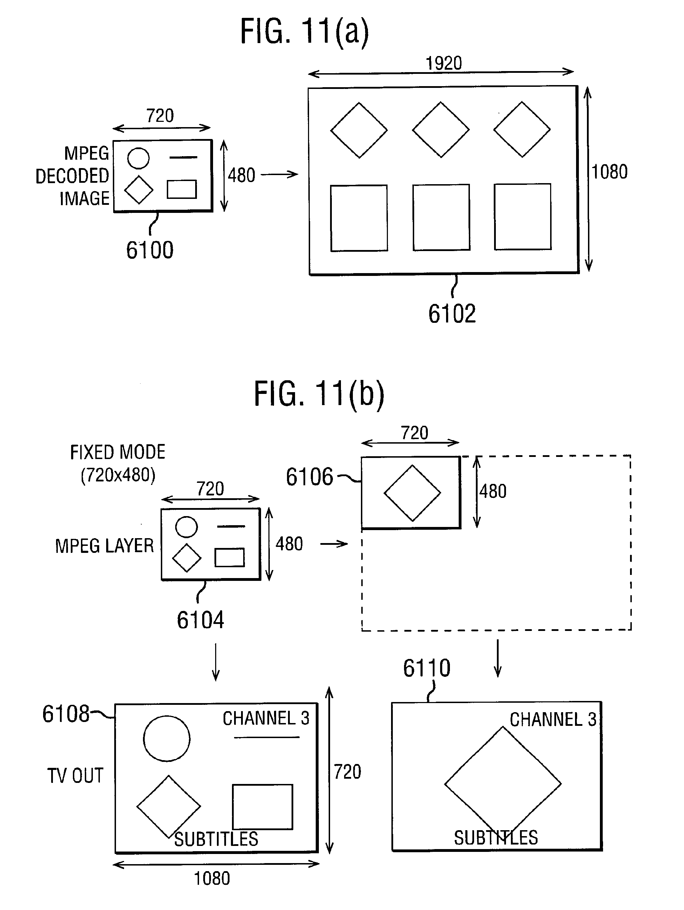

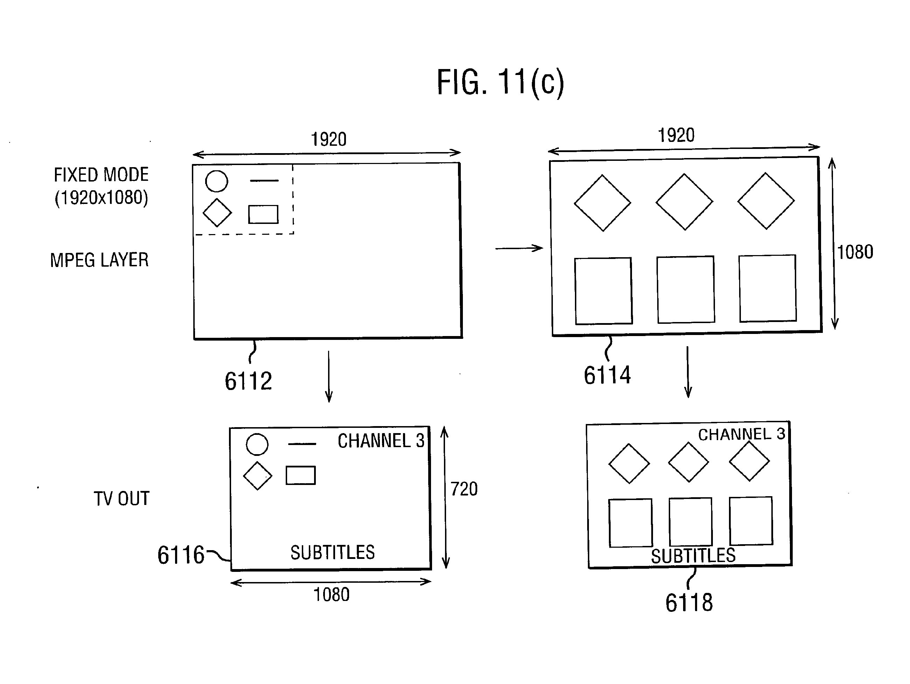

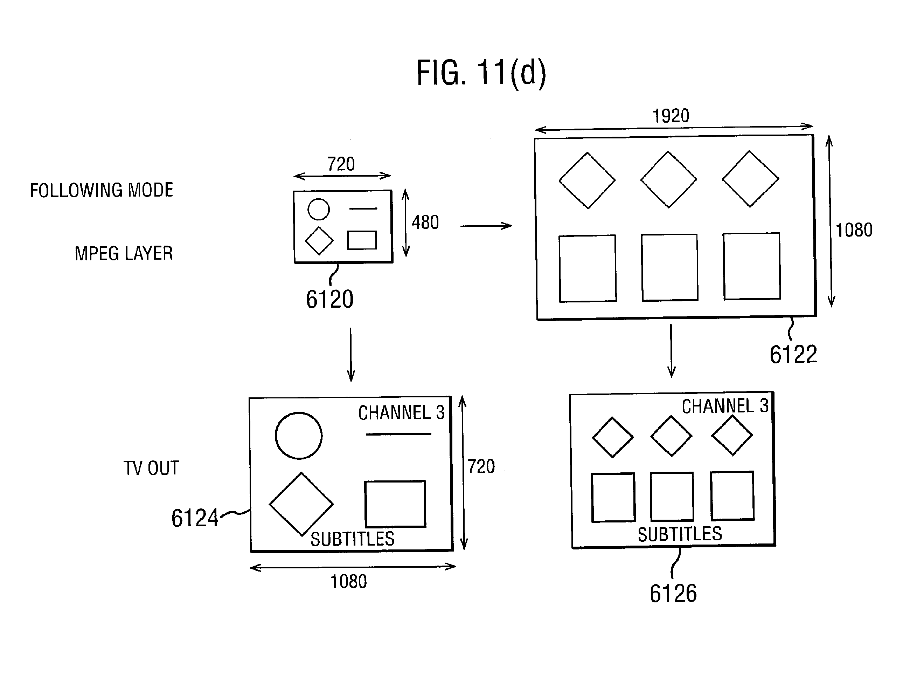

Figure 11 (a) is an example of a transition from a low resolution MPEG signal to a high resolution MPEG signal. In Figure 11 (a), the last frame 6100 of the low resolution signal is shown adjacent to the start frame 6102 of the high resolution signal which follows. Although shown in abstract form in the figures, the frames could be the end of a section of a high resolution film and the beginning of a low resolution advertisement break, for example.
Figures 11(b), 11(c) and 11(d) illustrate the effect on the MPEG layer source resolution following the change in resolution of the received broadcast signal (shown in Figure 11 (a)) for various modes of operation, which will now be described in more detail. In all examples, the (television) output resolution is held at a constant 1080x720 resolution. The process of adapting the output resolution in response to a change of input MPEG resolution will be described later.
Figure 11(b) is a first example of a 'fixed' mode, in which the MPEG video layer 6104, 6106 is maintained at a constant 720x480 resolution. The low resolution frame 6100 fits exactly into the MPEG layer 6104, and is then upsized (interpolated) to 1080x720 and combined with the graphics, background, subtitle and so on layers into the television output signal 6108 (as described in the previous section). After the resolution change, only part of the decoded MPEG frame 6102 fits into the MPEG layer 6106, however (the actual size of the decoded MPEG frame is indicated with a dotted line). As a result, the television output 6110 only contains part of the decoded MPEG output, and is clearly not satisfactory.
Figure 11(c) is a second example of a 'fixed' mode, in which the MPEG video layer 6112, 6114 is maintained at a constant 1920x1080 resolution. This time, the high resolution frame 6102 is scaled correctly in the television output 6118, since it fits exactly into the MPEG video layer 6114, but the low resolution frame 6100 fits only into part of the larger MPEG video layer 6112 (as indicated by the dotted line), and correspondingly forms only a small part of the television output 6116. Whilst this arguably produces a more viewable output than the previous example, it is clearly still not ideal.
Figure 11(d) illustrates the 'following' mode in which the resolution of the MPEG video layer 6120, 6122 is changed to match the resolution of the decoded MPEG data 6100, 6102. This results in a correctly scaled television output 6124, 6126, with the MPEG video layer being upsized and downsized for the low resolution and high resolution case respectively.

### Changes to the television output resolution

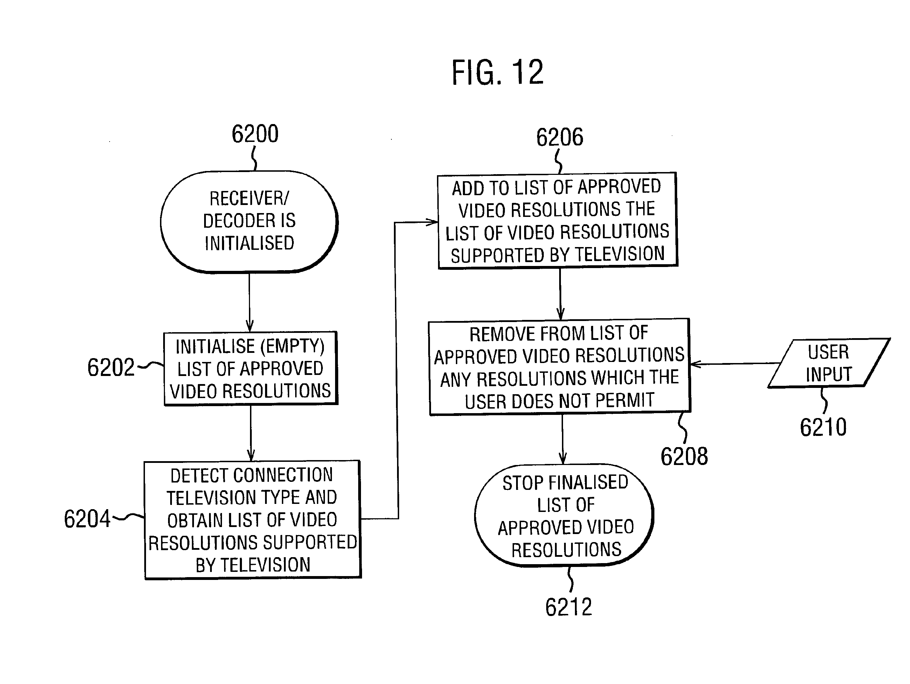

The process by which changes to the output resolution are reflected in changes to the source resolution of each layer making up the output (where appropriate) will now be described, with reference to Figures 12 to 19.

Figures 12, 13, 14 and 15 are flowcharts illustrating the steps in some of the processes involved with the resolution management.

With reference to Figure 12, the initialization process relating to the resolution management will be described. Central to this process is a list of approved video resolutions which depends on several factors. The first factor is the type of television connected to the receiver/decoder. If the television only accepts one output video resolution, that resolution will always be applied. The second factor is a choice by the user to limit the above list of authorised output video resolutions. For example, the user can decide to set the output video resolution to a single format even if the connected television is able to receive several formats; this user choice can be performed by software or by a hardware switch.

The initialization process commences with step 6200, in which the receiver/decoder 2000 is initialized, for instance, by the power being switched on, or after a reboot. An initial empty list of approved video resolutions is constructed in step 6202. In step 6204, the type of connected television set is sensed, and a list of the video resolutions supported by that type of television set is obtained. Next (step 6206), the initial list of approved video resolutions is filled with the list of resolutions found in step 6204. The user can provide user input 6210, by means of the SetUp application 3144, to specify non-permitted resolutions, for example if such resolutions are not aesthetically pleasing on the connected television 10000 or if the user wants to minimise changes in resolution. Such non-permitted resolutions are then removed from the list of approved video resolutions (step 6208). Finally, in step 6212, the finalized list of approved video resolutions is stored.

In variants of the preferred embodiment, for example if the connected television type can not automatically be determined, a further step either replaces or follows step 6204, in which new step the user, preferably through the SetUp application 3144, specifies the connected television type and/or the list of resolutions supported by the television. At any time the user can alter the list of approved video resolutions, using the SetUp application 3144 for example.

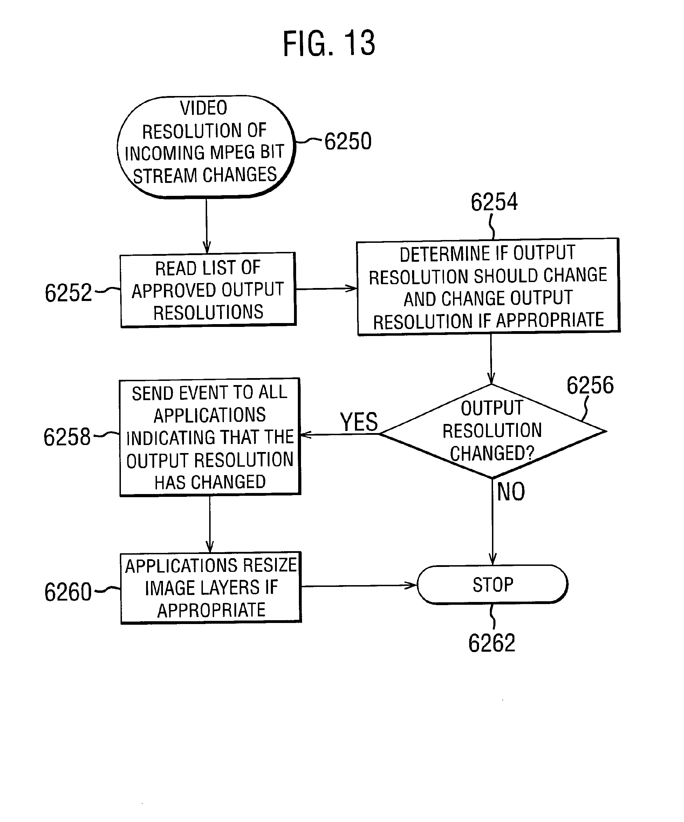

With reference to Figure 13, the process undertaken when a change in the resolution of the received broadcast video signal (the 'broadcast resolution') is sensed will now be described. In the initial step 6250, the video resolution of an incoming MPEG bit stream changes. Subsequently the list of approved output resolutions (determined by steps 6200 to 6212 in Figure 12) is read, and a determination is made - based on the above list - whether the output resolution should change, such a change then being effected as necessary (step 6254). If the selected output resolution is changed (YES in step 6206), an event is sent (in step 6208) to all applications, which can then decide whether or not to resize any associated layers (step 6210). If the selected output resolution is not changed (NO in step 6206), or once the applications have received the event, the process terminates (step 6212). As used herein, the term "broadcast resolution" preferably connotes the resolution of any relevant MPEG bit stream, even if such a bit stream originated from non-broadcast sources, such as local hard disks, firewire ports, and so on.

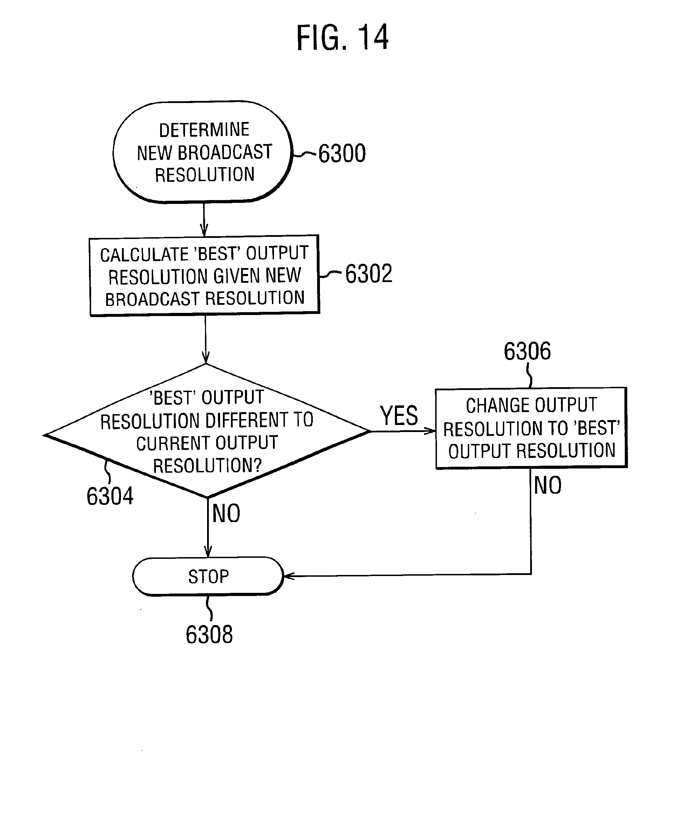

With reference to Figure 14, the process of determining if the output resolution should change, and changing the resolution accordingly (step 6204 above) will now be described in more detail. After the new broadcast resolution (the resolution to which the incoming MPEG bitstream changes in step 6250 of Figure 13) is determined (step 6300), the 'best' output resolution for the new broadcast resolution is calculated (step 6302). If the 'best' output resolution is different from the current selected output resolution (step 6304), the current selected output resolution is changed to match the new 'best' resolution (step 6306), and the process stops (step 6308).

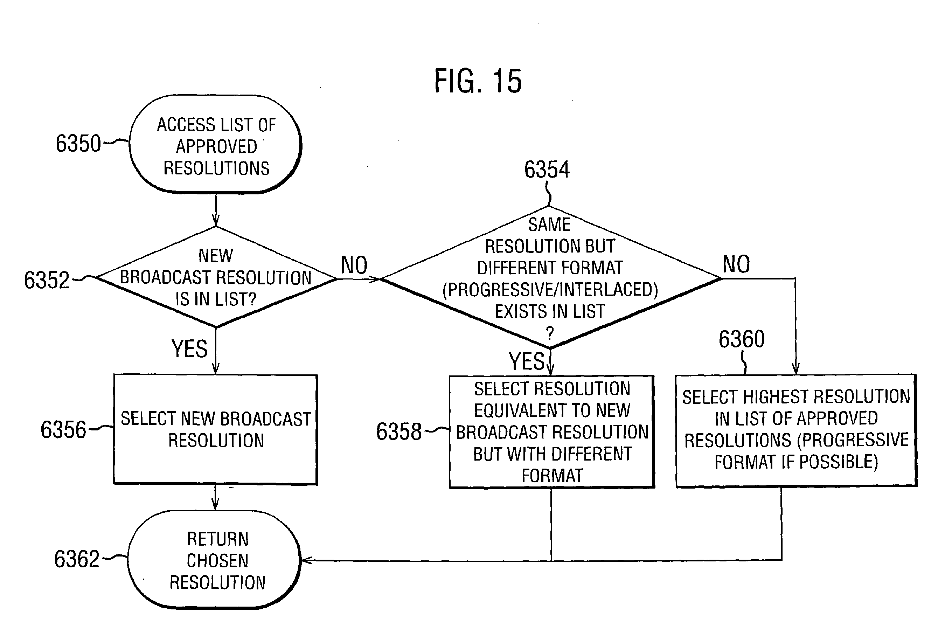

With reference to Figure 15, the process for choosing the 'best' output resolution will now be described. First of all (step 6350) the list of approved television resolutions, initially set in steps 6200 to 6212 of Figure 12, is accessed. If the new broadcast resolution, determined in step 6300 of Figure 14, is in the list of approved television resolutions (step 6352), then this new broadcast resolution is accepted (step 6356). If not, a further test is made to see if the corresponding resolution but with different format is present in the list of approved resolutions (step 6354), and if so, this equivalent resolution is selected (step 6358) - for example, if the new broadcast resolution is 720x480 (interlaced), but only 720x480 (progressive) is in the list of approved resolutions, then the latter will be selected. Otherwise (step 6360), the highest resolution in the list of approved resolutions will be selected (in respect of which resolution the progressive format will be selected if both progressive and interlaced formats are available).

Whilst described as single processes above, steps 6200 to 6214, 6250 to 6262, 6300 to 6308 and 6350 to 6362 may each form part of a larger routine and/or each constitute a number of actual threads or processes.

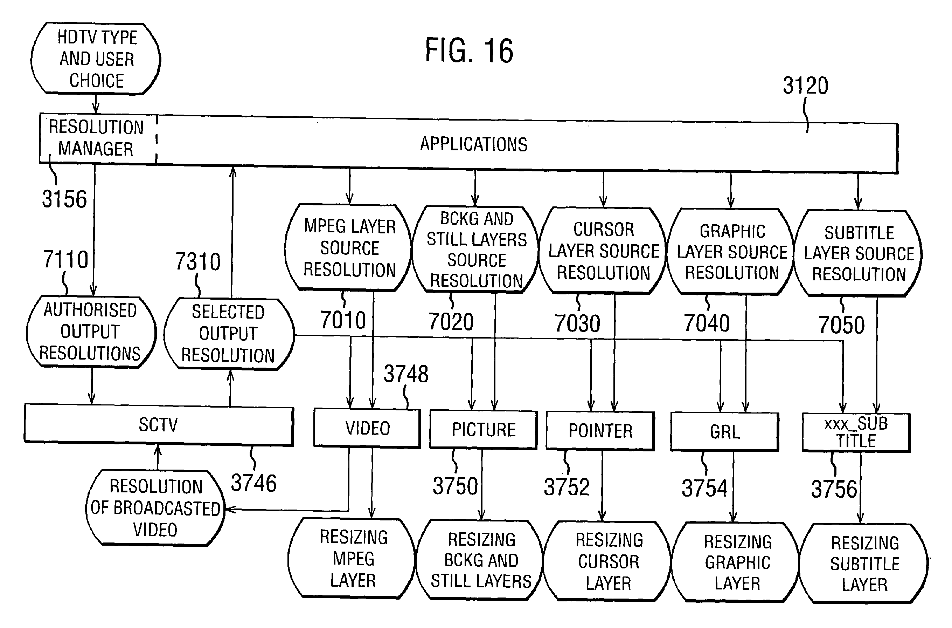

The more specific application of the above processes, particularly with reference to applications executed by the receiver/decoder, will now be described with reference to Figure 16.

To make use of the entire resolution offered by HD decoders, the size of each layer is defined independently by a respective SET_RESOLUTION command sent from the current application program to the Device Interface layer 3700. The selected size for each layer can then be retrieved by a respective GET_RESOLUTION command. For background and still layers, the corresponding commands are PICTURE_SET_RESOLUTION and PICTURE_GET_RESOLUTION. For the 2D graphic layer, the corresponding commands are the grl_setSrcResolution and grl_getSrcResolution commands. For the cursor layer, the corresponding commands are POINTER_SET_RESOLUTION and POINTER_GET_RESOLUTION. For the subtitle layer, the corresponding commands implemented by dedicated devices. For example, the ARIB_SUBTITLE_SET_ RESOLUTION and ARIB_SUBTITLE_GET_RESOLUTION commands are implemented by the ARIB SUBTITLE device.

The box in Figure 16 marked APPLICATIONS includes the application programs executed by the interpreters 3510 (not shown) and, in some cases, sub-threads or programs within the virtual machine 3500 (not shown). The current application program governs the display format of a received MPEG broadcast image and the different layers that are superimposable on the displayed MPEG broadcast image. The illustrated examples of such superimposable layers are: (i) backing and still layers 6020 (not shown), (ii) a cursor layer 6030 (not shown), (iii) a graphic layer 6040 (not shown), and, (iv) a subtitles layer 6050 (not shown). In variants of the preferred embodiment, additional layers may exist, be created and/or be destroyed, but the layers shown in Figure 16 serve as a suitable illustration.

Mechanisms are provided by the middleware to allow layers to be assigned temporarily or permanently to applications or other processes in the receiver/decoder, to avoid any conflicts over choices of resolution, and so on. Typically, the graphics system 3550 (shown in Figure 6) in the middleware has sole control over the graphic layer 6040 (not shown), which can be drawn on by applications using the graphics system commands provided. A "MediaStart" process typically controls the subtitle layer(s) 6050 (not shown) and the VIDEO device 3734 typically controls the MPEG layer 6010 (not shown) directly. Other layers are claimed by "foreground" applications when they are launched and released when the application exits - such "foreground" applications might be, for example, a web browser, electronic programme guide, or email program, in contrast to "background" applications such as channel zappers, timers and so on.

A value for each source resolution is originally preset by the manufacturer; for instance, the MPEG video layer source resolution might be set at 1920x1080, two of the other four layers set at 1080x720, and the other two layers set at 720x480. The source resolution for each of the backing and still layers 7020, cursor layer 7030, graphic layer 7040, and subtitles layer 7050 is thus preset to a value related to the preset value of the MPEG layer source resolution 7010.

When a display device such as the television set 10000 is connected to the receiver/decoder 2000, a resolution manager program (part of the box marked APPLICATIONS in Figure 10) senses the output resolutions that are compatible with the television set 10000. For instance, the resolution manager might determine that television set 10000 will accept any of the five formats mentioned above, i.e. 480i, 480p, 1080i, 720p, and 1080p and, unless the user indicates otherwise, those five resolutions become the authorised output resolutions 7110. However, the user may wish to restrict that list, that is, possibly have the video output displayed in only one of the 1080i, 720p, and 1080p resolutions, and in that case, those three resolutions become the authorised output resolutions 7110. The list of approved resolutions is set by use of the SCTV_SET_HD_FORMAT command, which passes the list of resolutions to the SCTV device for storage. In the preferred embodiment, the resolution manager forms part of the SetUp application 3144 (not shown), but in variants of the preferred embodiment, it is a separate application and/or middleware or hardware component.

When the VIDEO device 3734 (part of the Device Interface layer 3700) senses a change in the resolution of a received and decoded MPEG bit stream, it generates a EV_VIDEO_FORMAT_HD event and (if following mode is selected) also resizes the MPEG video layer to be the same as the new broadcast resolution.

The resolution manager 3156, amongst other things, manages the change in output resolution. Upon receipt of the EV_VIDEO_FORMAT_HD event, the resolution manager issues a VIDEO_FORMAT_INFO_HD command to interrogate the VIDEO device about the (new) characteristics of the video stream (including the aspect ratio, resolution, format [progressive/interlaced], and display format). The resolution manager 3156 reads the list of approved video resolutions from the SCTV device using a SCTV_HD_INFO command, determines whether to change the receiver/decoder output resolution (as described above), and if necessary changes the output resolution using a SCTV_SET_RESOLUTION command sent to the SCTV device (the above in effect carrying out steps 6252 and 6254 of Figure 13). In variants of the preferred embodiment, the resolution manager is also responsible for resizing the MPEG video layer (instead of the VIDEO device), using the VIDEO_SET_RESOLUTION command, in accordance with the current operating mode (following or fixed). It should be noted that "foreground" and other applications other than the resolution manager can react to changes in the output resolution by modifying the resolution of their respective layers (such as the graphics layer), but these applications do not themselves effect the change of output resolution. In variants of the preferred embodiment, however, such applications can force changes of output resolution, using the SCTV_SET_RESOLUTION command described above.

In further variants of the preferred embodiment, the processing described above as being carried out by the resolution manager 3156 is in fact carried out by the VIDEO device 3734 and/or SCTV device 3746, with the benefit that more of the processing can be contained within the device layer. In this case, the SCTV_SET_RESOLUTION command need not be provided, and any changes in output resolution are effectively automatic from the point of view of the applications running in the receiver/decoder.

When the SCTV device changes the output resolution, upon receipt of the SCTV_SET_RESOLUTION command mentioned above, it generates an EV_SCTV_HD_INFO event, which is sent to all of the applications and processes in the receiver/decoder. Amongst other things, the EV_SCTV_HD_INFO includes the selected output resolution 7130.

The various applications 3120, on receipt of the EV_SCTV_HD_INFO event, can then upsize or downsize the resolution of any layers for which they are responsible to take advantage of the changed output resolution. At other times, such as during initialisation, for example, the current application can interrogate the SCTV device 3746 about the selected output video resolution using the SCTV_HD_INFO command.

Thus, applications can always know the resizing being applied to the different layers, and can always change (if desired) the source resolution of the layers using the respective SET_RESOLUTION command after the output resolution has been changed. For example, the current application can decide to raise (or lower) the source resolution of the 2D graphic layer when the selected video resolution changes from 480i to 1080i (or, respectively,1080i to 480i) in order to use HD resolution of the 2D graphic layer (or, respectively, avoid downsizing of the 2D graphic layer). Furthermore, thanks to the flexibility of the system, (generally simple) applications which do not require such sophisticated control over their output need no modification to work in a plurality of output resolutions (they can just ignore any resolution change events).

To complement the SCTV_HD_INFO command described above, a VIDEO_FORMAT_INFO_HD command is also provided to allow the current application to find out different characteristics of the received broadcast video signal (aspect ratio, resolution, progressive/interlaced, display format) from the VIDEO device 3734. An EV_VIDEO_FORMAT_HD event is output from VIDEO device 3734 to the current application each time the broadcast video signal resolution changes. The VIDEO_GET_RESOLUTION command allows the current application to find out from the VIDEO device 3734 the currently-selected source resolution of the MPEG layer.

The precise details of the implementation of the various functions described above, and their distribution between hardware and software, are a matter of choice for the implementor and will not be described in detail. It is, however, noted that dedicated integrated circuits capable of performing the operations required in the receiver/decoder are commercially available or can be readily designed, and these can be used as the basis for a hardware accelerator, or more preferably modified to produce a dedicated hardware accelerator, to implement various of the operations required, thereby reducing the processing power required to run the software. However, the operations required may be implemented in software if sufficient processing power is available.

The modules and other components have been described in terms of the features and functions provided by each component, together with optional and preferable features. With the information given and specifications provided, actual implementation of these features and the precise details are left to the implementor. As an example, certain modules could be implemented in software, preferably written in the C programming language and preferably compiled to run on the processor used to run the application; however, some components may be run on a separate processor, and some or all components may be implemented by dedicated hardware.

The above modules and components are merely illustrative, and the invention may be implemented in a variety of ways, and, in particular, some components may be combined with others which perform similar functions, or some may be omitted in simplified implementations. Hardware and software implementations of each of the functions may be freely mixed, both between components and within a single component.

It will be readily understood that the functions performed by the hardware, the computer software, and such like are performed on or using electrical and like signals. Software implementations may be stored in ROM, or may be patched in FLASH.

It will be understood that the present invention has been described above purely by way of example, and modification of detail can be made within the scope of the invention.

Each feature disclosed in the description, and (where appropriate) the claims and drawings may be provided independently or in any appropriate combination.

## Claims

1. A receiver/decoder comprising means for receiving an audiovisual bit stream at a given input resolution, and means for selecting an output resolution to be applied to an output representation of the audiovisual bit stream.

2. A receiver/decoder according to Claim 1, wherein the means for selecting an output resolution is adapted to select a different resolution to the input resolution.

3. A receiver/decoder according to Claim 1 or 2, wherein the means for selecting an output resolution is adapted to select a new output resolution in response to a change in input resolution.

4. A receiver/decoder according to any of the preceding claims, further comprising means for receiving data governing a choice of resolutions, the means for selecting an output resolution being adapted to select the output resolution in accordance with the received data.

5. A receiver/decoder according to Claim 4, wherein the data governing a choice of resolutions comprises a list of acceptable resolutions.

6. A receiver/decoder according to any of the preceding claims, further comprising means for transforming a plurality of source image representations of which at least one has a different resolution into intermediate image representations having the given output resolution, and means for combining the intermediate image representations thus obtained to form an output image representation having the output resolution.

7. A receiver/decoder, comprising means for transforming a plurality of source image representations of which at least one has a different resolution into intermediate image representations having a given output resolution, and means for combining the intermediate image representations thus obtained to form an output image representation having the output resolution.

8. A receiver/decoder according to Claim 6 or 7, wherein the means for transforming a plurality of source image representations is adapted to maintain at the same resolution at least one source image representation during the transformation step.

9. A receiver/decoder according to any of Claims 6 to 8, further comprising means for modifying at least one of the source image representations, and means for repeating the transforming and combining steps.

10. A receiver/decoder according to any of Claims 6 to 9, further comprising means for assigning at least one source image representation to a first process and means for assigning at least one further source image representation to a second process.

11. A receiver/decoder according to any of the preceding claims, further comprising means for sending an event when the output resolution is changed.

12. A receiver/decoder according to any of Claims 6 to 11, further comprising means for modifying the resolution of at least one source image representation in response to a change in the output resolution.

13. A receiver/decoder according to any of Claims 6 to 12, further adapted to support as at least one source image representation at least one of a MPEG video layer, a background layer, a cursor layer, a graphic layer, and a subtitle layer.

14. A receiver/decoder according to any of the preceding claims, wherein at least one of the resolutions corresponds to a standard television display resolution.

15. A receiver/decoder comprising a receiver and a processor and associated memory, the receiver being adapted to receive an audiovisual bit stream at a given input resolution, and the processor being adapted to select an output resolution to be applied to an output representation of the audiovisual bit stream.

16. A receiver/decoder comprising a processor and associated memory, the processor being adapted to transform a plurality of source image representations of which at least one has a different resolution into intermediate image representations having an output resolution, and to combine the image representations thus obtained to form an output image representation having the output resolution.

17. A method of outputting a representation of an audiovisual bit stream, comprising receiving the audiovisual bit stream at a given input resolution, and selecting an output resolution to be applied to the representation of the audiovisual bit stream.

18. A method of outputting an output image representation having an output resolution, comprising transforming a plurality of source image representations of which at least one has a different resolution into intermediate image representations having the output resolution, and combining the image representations thus obtained to form the output image representation.

19. Apparatus for outputting a representation of an audiovisual bit stream at an output resolution, comprising means for receiving an audiovisual bit stream at a given input resolution, and means for selecting the output resolution to be applied to the representation of the audiovisual bit stream.

20. A computer program product adapted to perform a method as claimed in Claim 17 or 18.

21. A computer readable medium tangibly embodying a computer program product as claimed in Claim 20.

22. A signal tangibly embodying a computer program product as claimed in Claim 20.
